(19) Europäisches Patentamt
European Patent Office
Office européen des brevets

(11) EP 0 487 874 B1

(12) # EUROPEAN PATENT SPECIFICATION

(45) Date of publication and mention of the grant of the patent:
**26.07.2000 Bulletin 2000/30**

(51) Int. Cl.$^7$: **H04L 27/10**

(21) Application number: **91117393.8**

(22) Date of filing: **11.10.1991**

(54) **Signal conditioner**

Signalgestalter

Conditionneur de signal

(84) Designated Contracting States:
**DE GB NL**

(30) Priority: **30.11.1990 JP 33439990**
**13.03.1991 JP 4835291**
**14.03.1991 JP 4985091**
**14.03.1991 JP 4985191**

(43) Date of publication of application:
**03.06.1992 Bulletin 1992/23**

(73) Proprietor:
**Yokogawa Electric Corporation**
**Tokyo 180-8750 (JP)**

(72) Inventors:
- **Inou, Kiyoharu**
  **Mitaka-shi, Tokyo 181 (JP)**
- **Hasegawa, Yoshio**
  **Kokubunji-shi, Tokyo 185 (JP)**
- **Fujino, Kenji**
  **Kokubunji-shi, Tokyo 185 (JP)**
- **Imamura, Makoto**
  **Akishima-shi, Tokyo 196 (JP)**
- **Komuro, Takanori**
  **Tokyo 167 (JP)**
- **Hayashi, Shunsuke**
  **Ohme-shi, Tokyo 198 (JP)**
- **Yasui, Hitoshi**
  **Higashikurume-shi, Tokyo 203 (JP)**

(74) Representative:
**Henkel, Feiler, Hänzel**
**Möhlstrasse 37**
**81675 München (DE)**

(56) References cited:
**EP-A- 0 392 647**
**GB-A- 2 195 798**
**GB-A- 2 229 897**
**US-A- 4 818 994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.7 (HRS)/3.6

## Description

BACKGROUND OF THE INVENTION

1. Field of the Invention

The present invention relates to a signal conditioner (also known as a signal converter) used for a control apparatus which controls industrial processes as encountered in oil refinery, petrochemistry, steel making, and paper making.

2. Description of the Prior Art

In industrial processes as encountered in oil refinery, petrochemistry, steel making, and paper making, raw materials are processed and fuels are used. In these processes, temperatures, flow rates, pressures, liquid levels, and other parameters at various locations in the plant are measured with sensors. Actuators such as valves ancillary to the plant are controlled so that the above-described parameters are held within appropriate ranges. This is important where commercial products are manufactured at uniform quality. In order to provide such control, a control system consisting mainly of a computer has enjoyed wide acceptance.

In this connection GB-A-2 195 798 discloses a measuring system including a transducer unit which receives DC power from, and sends a measured value (as a DC signal) to an evaluation device via a two-wire line. For this purpose a voltage source is contained in the evaluation device. Furthermore, via the same two-wire line communication signals representing binary-coded information can be exchanged between the transducer unit and evaluation device as well as communication units connectable to the two-wire line.

Fig. 24 shows the locations of the signal conditioners referred to herein in the control system described at the beginning. Shown in this figure are a signal conditioner 4 for receiving signals and another signal conditioner 5 for transmitting signals. The roles of these signal conditioners are first described. The receiving signal conditioner 4 receives the output signal SA from a transmitter 6 and arithmetically processes it to convert it into a form which can be easily treated by a control unit 1 consisting mainly of a computer. The transmitting signal conditioner 5 converts the control signal from the control unit 1 into a signal SB adapted for long-distance transmission, for example, into a current signal of 4 to 20 mA shown in Fig. 6.

In the field of process control system, the signal SA obtained by a measurement and the signal SB for controlling an actuator 7 are normally used. The currents of these signals normally lie in the range from 4 to 20 mA. In these signals, 4 mA represents 0%, while 20 mA represents 100%. For example, when the signal SA of 4 mA is produced due to a measurement, it follows that the measured pressure is 0. When the produced signal SA is 20 mA, it follows that the measured pressure gives the full-scale reading. If the signal SB for controlling the actuator is 4 mA, then the valve is fully closed. If the signal SB is 20 mA, then the valve is fully opened. The reason why 0% is represented by 4 mA rather than by 0 mA is that the breaking of the transmission line producing a current of 0 mA is distinguished from 0%. Generally, the signal of 4 to 20 mA can be regarded as a low-frequency signal which varies slowly with the processed amount or with the amount to which the actuator is controlled.

The prior art signal conditioners are now described by referring to Fig. 24. The transmitter 6 is mounted inside a tube located in the process control system. For example, the transmitter 6 measures the pressure of the liquid contained in the tube, and converts the value of the pressure into the analog electrical signal SA. The receiving signal conditioner 4 arithmetically processes the analog signal SA introduced from the transmitter 6 to convert the signal into a form which can be easily treated by the control unit 1. The output signal from the conditioner 4 is converted into digital form by an analog-to-digital converter (ADC) 2 and supplied to the control unit 1.

We now give two examples of the arithmetic operations performed by the receiving signal conditioner 4 on the analog signal. Where the transmitter 6 measures a pressure, the transmitter converts the measured pressure value into the electrical signal SA, for example, of 4 to 20 mA. Only digitally coded signals (hereinafter simply referred to as digital signals) are intelligible to the control unit 1 consisting principally of a computer. The analog signal of 4 to 20 mA is not intelligible to the control unit. Generally, a voltage signal of 0 to 5 V should be applied to the analog-to-digital converter 2. If an electrical current of 4 to 20 mA is applied to it, it cannot convert the current into digital form. Therefore, the receiving signal conditioner 4 arithmetically processes its input analog signal, or the current signal SA of 4 to 20 mA, into a voltage signal of 1 to 5 V.

Where the transmitter 6 is a temperature transmitter using a sensor consisting of a thermocouple, it produces a thermoelectromotive force of several millivolts as the signal SA. Since this thermoelectromotive force is a minute voltage, the converter 2 is unable to convert its input signal into digital form accurately. Also, the amplitude of the thermoelectromotive force does not have a linear relation to temperature, and the signal SA itself does not directly represent temperature. The receiving signal conditioner 4 amplifies the thermoelectromotive force introduced from the thermocouple to an appropriate level which can be treated by the converter 2. Then, the signal SA, or the thermoelectromotive force, is converted into a signal which has a linear relation to temperature. This process is known as linearizing.

The control unit 1 performs arithmetic operations according to the measured value supplied to it via the receiving signal conditioner 4 to appropriately control the process. The obtained digitally coded signal is produced to the D/A converter 3, where the signal is converted into analog form. The resulting analog signal is fed to the transmitting signal conditioner 5, which then arithmetically processes the analog signal to convert it into the transmitted signal SB of 4 to 20 mA. This signal controls the actuator 7 such as a valve to control the flow rate to an adequate value.

The receiving signal conditioner 4 is equipped with a power supply (not shown in Fig. 24). In particular, the transmitter 6 generally needs supply of electric power, for example, of 24 V, to operate itself. The transmitting signal conditioner 4 is also equipped with this function of electric power, or power supply.

The prior art signal conditioners constructed as described above have the following disadvantages.

(1) Very numerous kinds must be prepared. Specifically, numerous kinds of transmitters 6 and actuators 7 are required to appropriately control the plant. For example, transmitters for measuring temperature, transmitters for measuring flow rates, and transmitters for measuring pressure are connected with various portions of the plant. The values obtained by the individual measurements are converted into their respective output signals taking different forms, e.g., a voltage of millivolts, a current of 4 to 20 mA, and a current of 10 to 50 mA. Therefore, in order to convert the applied various analog signals into the same kind of signal, for example, a voltage of 1 to 5 V, after these analog signals are arithmetically processed as mentioned above, receiving signal conditioners 4 respectively suited for the individual signal forms of the outputs from the transmitters are required to be prepared. In addition, one transmitter needs a DC power supply of 24V. Another transmitter necessitates a DC power supply of 12V. A further transmitter requires a constant current of 4 mA, and so on. As a result, the number of the combinations of the various power supplies and the various output forms is exorbitant. Thus, it is necessary that the receiving signal conditioners 4 be identical in kind with the combinations. Also, considerably numerous kinds of transmitting signal conditioners 5 are required to be prepared, because the control signals applied from the control unit 1 are matched to the signal forms respectively required by the connected actuators 7. That is, in the prior art techniques, the various receiving signal conditioners 4 and the various transmitting signal conditioners 5 must be prepared separately.

(2) The prior art signal conditioners lack flexibility and cannot be easily modified. In the field of process control, specifications are subject to change. However, if input conditions or output conditions for a circuit that processes an analog input signal are modified, the design of the circuit must be changed or some components must be replaced to accommodate the modification. That is, the prior art signal conditioners 4 or 5 are not flexible with circuit modifications. For this reason, whenever the input conditions or output conditions are varied, dedicated hardware devices must be prepared. Hence, they cannot quickly cope with modifications of specifications.

(3) The prior art signal conditioners are not adapted to be fabricated into the form of an IC. Since there exist a number of components, miniaturization cannot be realized. In the past, the analog signal which is obtained by a measurement and supplied from the transmitter 6 or from the control unit 1 has been arithmetically processed to convert the input signal into a desired signal. Although analog ICs which perform arithmetic operations on analog signals have existed, input resistors, feedback resistors, capacitors, and other external parts connected with them are needed and so it is impossible to reduce the number of components greatly. That is, few merits are obtained if they are fabricated in the form of an IC. In this way, the prior art signal conditioners which must perform arithmetic operations on analog signals are not adapted to be manufactured in the form of an IC.

(4) The prior art signal conditioners cannot appropriately adapt themselves to transmitters or actuators having communication function. In recent years, there have been a demand for transmitters and actuators having communication function for providing more adequate process control. We now describe a transmitter having communication function. An ordinary transmitter measures temperature, flow rate, pressure, liquid level, or the like, and converts it into a low-frequency signal of 4 to 20 mA. A transmitter having communication function carries information, e.g., the present measuring range of this transmitter, sent from the process control system by modulated wave. This modulated wave is sent to the control unit 1 together with the above-described low-frequency signal by multiplex transmission techniques. That is, the transmitter has intelligent function. The modulation can be effected by frequency modulation, frequency-shift keying (FSK), or other method.

To accommodate the transmitter producing a signal that carries multiplexed communication information, the receiving signal conditioner 4 must be equipped with a demodulator. Similarly, the transmitting signal conditioner 5 must have a modulator to accommodate itself to an actuator capable of receiving signals carrying multiplexed communication information. As described already in item (1) above, numerous kinds must be provided. In addition, where combinations of transmitters and actuators each of which may or may not be capable of multiplexing communication information are all taken into account, the number of the kinds of the signal conditioners is huge. Hence, they are unsuited for industrial production.

## SUMMARY OF THE INVENTION

It is an object of the present invention to provide signal conditioners which are few in kind, e.g., only one kind, but are capable of adapting themselves to various transmitters and actuators.

It is another object of the invention to provide signal conditioners which, when input or output conditions are modified, can accommodate themselves to the modification without the need to change the hardware simply by changing the software.

It is a further object of the invention to provide a signal conditioner whose circuit can be mostly fabricated in the form of an IC and which permits the components attached to the outside of the IC to be reduced in number.

It is a yet other object of the invention to provide signal conditioners which are few in kind, e.g., only one kind, but are capable of adapting themselves either to a transmitter or actuator capable of multiplexing communication information or to a transmitter or actuator incapable of multiplexing communication information.

According to the present invention these objects are solved by a signal conditioner as set out in claim 1.

Since various transmitters and actuators are connected with signal conditioners, it is necessary to select signal conversion function suited for the form of the output signal from the connected transmitter and for the form of the input signal to the connected actuator. Signal conditioners according to the invention have common hardware portions which perform main functions. The functions can be modified by software.

The receiver portion of the novel signal conditioner converts every input signal from a transmitter into digital form. Then, various arithmetic operations are performed on the resulting digital signal to separate and extract the values and communication information contained in the input signal, the values having been obtained by measurements. The contents of the arithmetic operations can be changed by software under the instructions from the control unit.

In accordance with the invention, it is only necessary to prepare a few kinds of signal conditioners, i.e., a few kinds of hardware, to accommodate quite varied transmitters, sensors, and actuators.

Other objects and many of the attendant advantages of the invention will be readily appreciated as the signal conditioners become better understood by reference to the following detailed description when considered in connection with the accompanying drawings.

## BRIEF DESCRIPTION OF THE DRAWINGS

Fig. 1 is a block diagram of a signal conditioner according to the invention;
Fig. 2 is a block diagram of another signal conditioner according to the invention;
Fig. 3 is a block diagram of the analog-to-digital converter used in the signal conditioners shown in Figs. 1 and 2;
Fig. 4, (a) and (b), are waveform diagrams of multiplexed signals;
Fig. 5, (a) and (b), are diagrams illustrating FSK modulation;
Fig. 6 is a diagram illustrating a signal obtained by a measurement;
Fig. 7 is a diagram illustrating the relation of the conversion efficiencies of an analog-to-digital converter and of a digital-to-analog converter to frequency;
Fig. 8 is a block diagram of a further signal conditioner according to the invention;
Fig. 9 is a circuit diagram of specific examples of the power supply part 92 shown in Fig. 8 and of the input circuit 51 shown in Figs. 1, 2, and 8;
Fig. 10 is a diagram similar to Fig. 9, but in which the switch SW3 shown in Fig. 9 has been switched to the other state and some modifications are made;
Fig. 11 is a diagram similar to Fig. 9, but in which some modifications are made;
Fig. 12 is a diagram similar to Fig. 11, but in which some modifications are made;
Fig. 13 is a diagram similar to Fig. 10, but in which some modifications are made;
Fig. 14 is a block diagram of a still other signal conditioner according to the invention;
Fig. 15 is a circuit diagram of the power supply part 92 shown in Fig. 14 and its surroundings;
Fig. 16 is a time chart of signals produced at various locations inside the circuit shown in Fig. 15;
Fig. 17 is a circuit diagram of a modification of the circuit shown in Fig. 15;
Fig. 18 is a block diagram of a yet other signal conditioner according to the invention;
Fig. 19, (a) and (b), show the waveforms of a transmitter and a sensor producing voltage output signals;
Fig. 20 is a diagram illustrating the operation of the DC/DC converter shown in Fig. 8;
Fig. 21 is a block diagram of a modification of the circuit located around the ADC 52 shown in Fig. 1;
Fig. 22 is a time chart of signals produced at various locations in the circuit shown in Fig. 21;
Fig. 23 is a diagram showing the attenuation characteristics of the two low-pass filters of the circuit shown in Fig. 21;

Fig. 24 is a diagram showing the locations of signal conditioners in a control system; and

Fig. 25 is a block diagram of the DAC 69 shown in Fig. 1, 8, 14, 18.

## DETAILED DESCRIPTION OF THE PREFERRED EMBODIMENTS

Referring to Fig. 1, there is shown a signal conditioner according to the present invention. This conditioner, indicated by reference numeral 50, includes a control unit 1, a transmitter 6, and an actuator 7 which are similar to the counterparts already described in connection with Fig. 24. This signal conditioner 50 combines the function of the analog-to-digital converter (ADC) 2, the function of the digital-to-analog converter (DAC) 3, the function of the receiving signal conditioner 4, and the function of the transmitting signal conditioner 5 shown in Fig. 24.

The signal conditioner 50 further includes input terminals P1, P2, P7, P8 and output terminals P3, P4, P7, P8. A receiver circuit part corresponding to the receiving signal conditioner 4 and the analog-to-digital converter 2 shown in Fig. 24 is located between the input terminals P1, P2 and the output terminals P3, P4. A transmitter circuit part corresponding to the transmitting signal conditioner 5 and the digital-to-analog converter (DAC) 3 shown in Fig. 24 is positioned between the input terminals P7, P8 and the output terminals P5, P6. A line (not shown) is connected from the signal conditioner 50 to the transmitter 6 shown in Fig. 1 to supply DC power to it. It is to be noted that the power supply part is not shown in Fig. 1. The actuator 7 is powered by an electrical current supplied from an output circuit 68. Where an output signal of 4 to 20 mA is produced, said electrical current is 4 mA.

The receiver circuit part receives the output signal and communication information from the transmitter 6 and sends them to the control unit 1, the output signal from the transmitter 6 indicating the value obtained by a measurement. The structure of this receiver circuit part is now described. The receiver circuit part has an input circuit 51 which acts to convert current into voltage and to convert impedance. The function of converting current into voltage can be implemented by a resistor, for example. The function of converting impedance can be attained by an operational amplifier. In particular, in this analog circuit 51, the current signal SA supplied from the transmitter 6 is passed through a resistor R and converted into a voltage, which in turn is amplified by a variable gain amplifier 131 shown in Fig. 21. The gain of this operational amplifier is determined by the instructions from the control unit 1. Where the transmitter 6 is a temperature-measuring instrument comprising a sensor consisting of a thermocouple, the resistor R (Fig. 21) acting as the current-to-voltage converter is disconnected from the circuit under the instructions from the control unit 1. Then, the gain of the variable gain amplifier is switched to the higher value by operating a switch 136 shown in Fig. 21. In accordance with the present invention, minimum function is imparted to this input circuit 51, i.e., it has only amplification function. A digital signal processing part 61 (described later) performs arithmetic operations.

In the description of the novel apparatus, it is assumed that a value obtained by a measurement or an actuator control signal and communication information are multiplexed and that the multiplexed signal is transmitted between a control station 10 (Fig. 24) and a process control system. The multiplexing can be either frequency-division multiplexing shown in Fig. 4(a) or time-division multiplexing shown in Fig. 4(b). In the frequency-division multiplexing shown in Fig. 4(a), FSK modulated wave and a low-speed signal of 4 to 20 mA are superimposed, the low-speed signal indicating a value derived by a measurement. In the time-division multiplexing shown in Fig. 4(b), time is divided into plural time slots. For example, FSK modulated wave is transmitted during the period between t1 and t2 and during the period between t3 and t4. The low-speed signal is transmitted during the period between t2 and t3. The frequency-shift keying (FSK) is a signaling method in which two different frequencies f0 and f1 are used to represent a binary zero and a binary one which indicate information to be transmitted as shown in Fig. 5.

In Fig. 1, the waveforms of frequency-division multiplexed, transmitted signals are shown. The ADC (analog-to-digital converter) 52 converts every multiplexed analog signal supplied from the input circuit 51 into a digitally coded signal SC. For example, each instantaneous value of the amplitude of the synthesized waveform *m* shown in Fig. 4(a) is sequentially converted into the digitally coded signal SC by the ADC 52. Therefore, the digitally coded signal SC contains information (for example, A1 and A2) indicating values obtained by measurements, as well as information carried by the FSK modulated wave (Fig. 5(a)).

The aforementioned digital signal processing part 61 extracts the low-speed signal component and the modulated signal component (or high-speed signal component) from the digitally coded signal SC separately. These two extracted components are subjected to digital signal processing to extract the values obtained by the measurements and the information transmitted. As an example, the digital signal processing part 61 consists of a digital band-pass filter 53, a digital demodulator 54, a digital low-pass filter 55, a measuring part 56, and other components. For instance, the measuring part 56 is composed of a digital computing unit 58, a memory 59, a table 60, and other components. The demodulator 54 extracts information transmitted. The measuring part 56 extracts the values obtained by the measurements. The digital signal processing part 61 constructed as described thus far can comprise a digital signal processor or the like. The characteristics and the functions of the components 53-60 can be modified, for example, by software.

An interface 64 disposed behind the digital signal processing part 61 described just above receives the output signals S1 and S2 from the processing part 61 and sends these signals S1 and S2 to the control unit 1. That is, the interface 64 makes a matching of the type of data and the method of transmission of data between the signal processing part 61 and the control unit 1 to permit data S1 and S2 to be transmitted from the processing part to the control unit. For example, the interface receives serial data S1 from the digital demodulator 54 and converts it into parallel data S3, which is sent out. In Fig. 1, only one signal line exists for each one kind of the data S3 and S4, and only one photocoupler 65 or 66 is disposed for each one kind of data S3 and S4. In practice, plural lines and plural photocouplers are used in combination for each one kind of data.

The photocouplers 65 and 66 are insulating means which prevent excessively large signals from the process control system from being directly applied to the control unit 1. The photocoupler 65 produces a reception signal S5 indicating information transmitted. The photocoupler 66 delivers a measurement signal S6 indicating a value obtained by a measurement.

The apparatus further includes a transmitter circuit part which receives an actuator control signal S9 from the control unit 1 and a transmission signal S8 and sends them to the actuator 7. The signal S9 indicates information transmitted, while the signal S8 indicating the amount to which the actuator is controlled. The structure of this transmission function part is now described. Photocouplers 75 and 76 are similar in operation and advantages to the photocouplers 65 and 66. Specifically, these photocouplers transfer signals S8 and S9 from the control unit 1 to an interface 78 while providing electrical insulation between them. The interface 78 is also similar in operation and advantages to the above-described interface 64. That is, the interface 78 makes a matching of the type of data and the method of transmission of data transferred from the control unit 1 to a second digital signal processing part 70 to permit the data S8 and S9 to be transmitted from the control unit 1 to the signal processing part 70. The result is that data S10 and S11 shown in Fig. 1 are supplied from the inputs/outputs (I/O) 73 and 74 of the interface 78 to the digital signal processing part 70. Although the data S10 and S11 are shown to have analog waveforms, they are digitally coded signals in practice.

The second digital signal processing part 70 receives the two digitally coded signals S10 and S11 from the interface 78 and arithmetically processes them. The processing part 70 sums up the digitally coded signal S11 and another digitally coded signal S12 and produces a multiplexed, digitally coded signal S13. The digital signal S11 indicates the amount (corresponding to 4 to 20 mA) to which the actuator 7 is controlled. The digital signal S12 represents the amplitude of the modulated signal. For example, this digital signal processing part 70 comprises a digital modulator 72 and a digital adder 71.

The digital modulator 72 produces a digitally coded signal indicating each instantaneous value of the amplitudes of the signals of the frequencies f1 and f0 according to the binary state, i.e., 1 or 0, of the applied signal S10 as shown in Fig. 5. More specifically, if the signal S10 assumes state 1, the modulator 72 produces a digital code value indicating the instantaneous value of the amplitude of the signal of the frequency f1. If the signal S10 takes state 0, then the modulator 72 produces a digital code value indicative of the instantaneous value of the amplitude of the signal of the frequency f0.

In the example of Fig. 1, the actuator control signal S9, or S11, is directly applied to the digital adder 71 without being processed digitally at all. It is also possible to digitally process the signal by some means or other. For example, in some cases, the control unit 1 produces the signal S9 indicating the amount (0 to 100%) to which the actuator 7 is controlled. A logic block (not shown) included in the digital processing part 70 converts this signal into a digitally coded signal corresponding to 4 to 20 mA.

The digital modulator 72 makes FSK modulation, for example, receives the signal S10 shown in Fig. 1, and produces the signal S12. Although this signal S12 is shown to take analog form in Fig. 1, it is a digitally coded signal indicating the instantaneous value of the amplitude of the signal waveform S12 shown in Fig. 1. The digital adder 71 produces the sum of the digital signals S12 and S11, i.e., delivers a frequency-division multiplexed signal S13. This second digital signal processing part 70 can consist of a digital signal processor or the like, in the same way as the first digital signal processing part 61. The characteristics and the functions of the components 71 and 72 can be altered by software.

An ADC (analog-to-digital converter) 69 converts every multiplexed analog signal supplied from the digital signal processing part 70 into an analog signal S14. That is, the converter 69 converts the digitally coded signal S13 into a synthesized analog waveform *m* shown in Fig. 4. This analog signal *m* contains information e.g., corresponding to levels A1 and A2 shown in Fig. 4, indicating the amount to which the actuator 7 is controlled, as well as information, e.g., information corresponding to Fig. 5(a), transmitted by FSK modulated wave.

The output circuit 68 is an analog circuit which converts this signal S14 into a current signal SB. Generally, the output signal S14 from the DAC 69 is a voltage signal.

The actuator control signal S11 applied to the adder 71 corresponds to the current of 4 to 20 mA. Therefore, in the output signal SB from the output circuit 68, the FSK modulated wave is superimposed on the low-speed signal of 4 to 20 mA. The waveform of the output signal SB is shown in Fig. 1.

A receiving circuit 7a incorporated in the actuator 7 receives the signal SB and extracts the amount (a current of 4 to 20 mA) to which the actuator 7 is controlled, to actuate a final controlling means 7b, for example, a valve. The receiving circuit also serves to demodulate and extract the information transmitted. The range of the actuator 7 is selected under the instructions contained in the transmitted information.

The operation of the apparatus of Fig. 1 built in this way is now described. First, the receiver circuit part including components 51, 52, 61 is described. The novel signal conditioner 50 performs suitably, whether the transmitter 6 connected with the conditioner has communication function or do not. It is now assumed that the connected transmitter has communication function.

More specifically, the transmitter 6 converts a value obtained by a measurement, e.g., a pressure value obtained by a measurement, into a low-speed signal of 4 to 20 mA. The resulting low-speed signal is multiplexed with an FSK modulated signal, or communication information, and the produced signal is delivered from the output. As an example, the communication is half-duplex FSK transmission (1200 baud).

The input circuit 51 has the resistor R (Figs. 9 and 21). The current signal SA in which the signal obtained by a measurement and the communication signal are maintained multiplexed is passed through this resistor R and converted into a voltage signal. This voltage signal is amplified to an appropriate voltage level by an amplifier 131 (Fig. 21) incorporated in the input circuit 51. The amplified signal is fed to the ADC 52, which converts every input analog signal into digital form before application to the digital signal processing part 61.

In the digital signal processing unit 61, the digital band-pass filter 53 acts to extract desired high-frequency components (or communication information component) from the introduced digitally coded signal SC. The digital low-pass filter 55 serves to extract low-frequency components (or values obtained by measurements). The filtering characteristics of the filters 53 and 55 can be adjusted by software. For example, where the modulated wave contained in the signal SA carrying the communication information lies in a different frequency band, the filtering characteristics can be adjusted without modifying the hardware. The band-pass filter 53 shown in Fig. 1 functions to extract high-frequency components, and consists of a high-pass filter.

However, where plural kinds of communication information are transmitted unlike in the example of Fig. 1, it is necessary to use band-pass filters for the following reason. Where two pieces of communication information Y1 and Y2 are transmitted, the information Y1 is modulated into a signal which lies within a frequency band centered at frequency fy1, for example. The other information Y2 is modulated into a signal which lies within a frequency band centered at frequency fy2. Therefore, band-pass filters are needed to extract the signals having the bands fy1 and fy2, respectively.

The digital demodulator 54 demodulates the high-frequency components supplied from the band-pass filter 53, resulting in the digitally coded signal having the waveform S1 shown in Figs. 1 and 5(a). We now describe an example of the demodulation operation. A zero-crossing detector (not shown) incorporated in the demodulator 54 compares the signal delivered from the band-pass filter 53 with zero point. Then, FSK modulated signal is demodulated from the period during which the zero point is crossed. The communication information S1 demodulated in this way is sent to the control unit 1 via the I/O 62 of the interface 64 and via the photocoupler 65.

The measuring part 56 performs arithmetic operations on the digital low-frequency components supplied from the low-pass filter 55 to obtain the value measured by the measurement. These arithmetic operations are carried out by the digital computing unit 58. Data necessary for the arithmetic operations and data produced during these operations can be stored in the memory 59. The measuring part 56 has the table 60. Where it is necessary to convert data having a nonlinear relation into a data having a linear relation, this table 60 is referred to. For example, the relation of the thermoelectromotive force of the thermocouple to temperature can be placed in this table. Temperature can be immediately read from the value of the thermoelectromotive force by referring to the table 60. The digital computing unit 58 can perform multiplication, calculation of squares, averaging, and other arithmetic operations. These arithmetic functions can be implemented by known techniques. For example, by using averaging function, the average value of the low-frequency components (A1 and A2 of Fig. 4(a)) of the signal SA sent from the transmitter 6 can be taken. The digitally coded signal S2 indicating the value obtained by the measuring part 56 is transmitted to the control unit 1 via the I/O 63 of the interface 64 and also to the photocoupler 66.

The operation of the transmitter circuit part including the components 68, 69, 70, 78 is next described. The control unit 1 sends the transmission signal S8 and the actuator control signal S9 to the interface 78 via the photocouplers 75 and 76, respectively. These signals S8 and S9 are digitally coded signals. The transmission signal S8 indicates information transmitted. The control signal S9 indicates the amount to which the actuator 7 is controlled. As a result, the signal S10 (shown in Fig. 1) consisting of a list of data transmitted is sent from the I/O 73 of the interface 78 to the digital modulator 72. This modulator 72 produces the digitally coded signal S12 in response to the signal S10, the signal S12 indicating the amplitude of the modulated wave. Although the signal S12 is shown to have analog waveform, the signal is actually a digitally coded signal representing the instantaneous value of the amplitude of the modulated wave.

Meanwhile, the I/O 74 of the interface 78 supplies the signal S11 to the second digital signal processing part 70, the signal S11 indicating the amount to which the actuator 7 is controlled. Where a digitally coded signal corresponding to a current of 4 to 20 mA is produced as the actuator control signal S9 by the control unit 1, the digital signal processing part 70 can supply the input signal S11 directly to the adder 71 without arithmetically processing it at all. However, if the control unit 1 produces only the signal S9 indicating the amount, i.e., from 0% to 100%, to which the actuator 7 is controlled, then an arithmetic block (not shown) included in the digital signal processing part 70 converts the signal S9 into a digitally coded signal corresponding to a signal of 4 to 20 mA.

The digital adder 71 produces the sum of the signals S12 and S11 and delivers the signal S13 which is frequency-division multiplexed. The DAC 69 converts every multiplexed, digitally coded signal S13 supplied, from the digital signal processing part 70 into the analog signal S14 which contains two kinds of information. One kind of information indicates the amount to which the actuator 7 is controlled, and consists of, for example, low-frequency components corresponding to A1 and A2 of Fig. 4. The other kind of information is communication information carried by the FSK modulated wave, and consists of, for example, high-frequency components as shown in Fig. 5(b).

The output circuit 68 converts this signal S14 into the current signal SB and delivers this signal. Since the actuator control signal S11 applied to the adder 71 corresponds to an electrical current of 4 to 20 mA, the output circuit 68 produces the signal SB having the waveform shown in Fig. 1. In this signal SB, the FSK modulated wave is superimposed on the low-frequency signal of 4 to 20 mA.

The receiving circuit 7a included in the actuator 7 receives this signal SB and activates the final controlling element 7b with the current of 4 to 20 mA. The receiving circuit 7a also acts to extract the communication information from the high-frequency components of the transmitted signal by demodulation, and to change the range of the actuator 7 to the range instructed by the communication information.

Although the signal conditioner 50 shown in Fig. 1 is equipped with both receiving circuit portion and transmission circuit portion, the conditioner may have only one of them. The signal conditioner shown in Fig. 2 is equipped with only the receiving circuit portion.

In the above example, the multiplexed signal is frequency-division multiplexed. Obviously, the novel signal conditioner can transmit and receive information about values obtained by measurements and communication information with a time-division multiplexed signal (Fig. 4(b)). In particular, during the period between t1 and t2 and during the period between t3 and t4 of Fig. 4(b), the signal S1 is obtained from the digital demodulator 54. During the period between t2 and t3 of Fig. 4(b), the signal S2 is obtained from the measuring part 56. In the description already made in connection with Fig. 1, the signal applied between the terminals P1 and P2 consists of the low-frequency signal of 4 to 20 mA multiplexed with the modulated wave. However, where the transmitter 6 relies on a sensor consisting of a thermocouple, a feeble thermoelectromotive force is produced as the signal SA. Where the sensor producing the signal SA of such a feeble voltage is connected with the signal conditioner, the control unit 1 applies an instruction signal to the signal conditioner 50 to disconnect the resistor R from the input circuit 51, the resistor R being used for current-to-voltage conversion. Consequently, the gain of the variable gain amplifier included in the input circuit 51 is switched to the higher gain (see Fig. 21).

The analog-to-digital converter (ADC) 52 shown in Fig. 1 is next described. Analog-to-digital converters are broadly classified as flash converters and as successive-approximation converters. A flash ADC uses $2^n$ comparators, and converts input voltage directly to a coded digital value closest to the input voltage. This type of ADC makes use of tracking analog-to-digital conversion. Specifically, digital codes are so tracked that the output voltage from a reference digital-to-analog converter is closest to the input signal.

The novel apparatus can reduce the number of kinds and be easily fabricated in the form of an IC, if either kind of analog-to-digital converter is used as the ADC 52. However, if an oversampled analog-to-digital converter is employed in the signal conditioner 50 which transfers signal containing multiplexed communication information, then great merits can be had as described later. Therefore, this oversampled ADC is next described.

In recent years, in the field of process control, a resolution on the order of 14 bits have been required in measuring the low-frequency components, such as A1 of Fig. 4, of less than 100 Hz sent from the transmitter 6. On the other hand, the frequency of the communication signal (see Fig. 4) multiplexed with the measured components is generally of the order of 10 KHz. It is considered that a resolution of 6 bits suffices to measure the communication signal, because the contents of the communication signal can be read as long as f0 and f1 can be distinguished from each other as shown in Fig. 5.

Accordingly, an analog-to-digital converter which exhibits a resolution of 14 bits at 100 Hz and 6 bits at 10 KHz is needed as the ADC 52 of the apparatus shown in Fig. 1. Fig. 7 shows the relation of the number of converted bits, or resolution, to the frequency of the input signal applied to an ADC. Normally, in an analog-to-digital converter, the number of converted bits has a reciprocal relation to frequency. That is, the relation is given by line L in Fig. 7. If an ADC having a given design has a characteristic indicated by point B2 in Fig. 7, then it follows that this converter can convert analog signal of a frequency between 0 and f3 with A3 bits. Another ADC has a characteristic indicated by point B3.

Therefore, if no measure is taken, an ADC which needs 14 bits at 10 KHz and has a characteristic indicated by point B6, i.e., satisfies both point B1 (a resolution of 6 bits at 10 KHz) and point B5 (a resolution of 14 bits at 100 Hz), is required. However, this ADC which needs 14 bits at 10 KHz has a property much superior to the characteristic line L (Fig. 7) generally obtained. If this ADC is fabricated from a flash type converter or from a successive approximation type converter, then the apparatus becomes costly and large in size.

The present invention solves the above-described problems, i.e., expensiveness and bulkiness, by using an oversampled ADC as the ADC 52. In summary, an oversampled ADC provides large oversampling ratios for low-frequency signal components. Hence, analog to digital conversion can be effected at a high accuracy. For high-frequency signal components, the oversampling ratio is reduced and so the accuracy of the analog to digital conversion is deteriorated. That is, in accordance with the present invention, a resolution of 14 bits at 100 Hz and a resolution of 6 bits at 10 KHz can be realized simultaneously with a single oversampled analog-to-digital converter.

This is described in further detail. The configuration of a commonplace oversampled analog-to-digital converter is shown in Fig. 3, which corresponds to the block 90 surrounded by the broken line in Fig. 1. Generally, an oversampled analog-to-digital converter is a combination of a Σ-Δ modulator 52 and digital filters 53, 55 shown in Fig. 3, the filters being connected to the output of the modulator 52. In the present specification, it is assumed that the modulator 52 corresponds to the ADC 52 shown in Fig. 1 so that the circuit of Fig. 3 may correspond to the circuit of Fig. 1.

The operation of the circuit shown in Fig. 3 is now described. The output SG from the input circuit 51 shown in Fig. 1 is applied to a prefilter 81 shown in Fig. 3. This filter 81 filters out those frequency components which are higher than the Nyquist frequency, or half of the sampling rate, to prevent foldover noise due to sampling. The output from the filter 81 is sampled by a switch SW2. One of the features of the oversampled analog-to-digital converter is that the sampling rate is set sufficiently higher than, i.e., at least 10 times as high as, the frequency of the signal obtained from the subject that should be eventually measured. An analog adder 82 produces the difference between the sampled input signal value and virtual, forecasted waveform produced from a 1-bit DAC 86. An integrator 83 integrates the output from the adder 82. The output from the integrator 83 is quantized by a comparator 84. The output from the comparator 84 is fed to the 1-bit DAC 86 via a 1-clock delay unit 85 consisting of a D flip-flop. A block 52 indicated by the broken in Fig. 3 is generally known as a Σ-Δ modulator. This modulator subjects its input SG to sigma-delta modulation, and produces the modulated signal. The signal SF subjected to the sigma-delta modulation differs somewhat in sense from digital signals obtained from a flash type or successive approximation type converter, but yet the sigma-delta modulated signal SF is derived by converting the input signal SG into digital codes. For this reason, it is assumed in the present specification that the Σ-Δ modulator 52 shown in Fig. 3 corresponds to the ADC 52 shown in Fig. 1.

The aforementioned "somewhat difference in sense" is now described. If the ADC 52 shown in Fig. 1 consists of a flash ADC or successive approximation ADC, its output signal SC is a digitally coded signal which corresponds to the input signal SG in a 1:1 relation. The output signal is passed through the band-pass filter 53 and the low-pass filter 55 to extract high-frequency components SD and low-frequency components SE. On the other hand, if an oversampled ADC is used, the output SF from the Σ-Δ modulator 52 shown in Fig. 3 is obtained by subjecting the input signal SG to sigma-delta modulation. Thus, the output signal does not have a 1:1 relation to the input signal SG. In the oversampled ADC, a digitally coded signal corresponding to the input signal SG is not obtained until the sigma-delta modulated signal SF is passed through the digital filters. More specifically, the band-pass filter 53 shown in Fig. 3 produces the digitally coded signal SD which corresponds to the high-frequency components of the input signal SG in a 1:1 relation, while the low-pass filter 55 delivers the digitally coded signal SE that corresponds to the low-frequency components in a 1:1 relation. The band-pass filter 53 and the low-pass filter 55 shown in Fig. 3 are the same as the counterparts shown in Fig. 1.

In brief, the signal SD which is obtained by converting the high-frequency components shown in Fig. 5 into 6-bit digital codes, for example, is extracted by passing the sigma-delta modulated signal SF through the band-pass filter 53. Also, the signal SE which is obtained by converting the low-frequency components arising from a measurement into 14-bit digital codes, for example, is extracted by passing the modulated signal through the low-pass filter 55.

In particular, when the low-pass filter 55 is employed, the low-frequency components of 4 to 20 mA are sampled at a large oversampling ratio and arithmetically processed. Therefore, the quantization error is small. The digitized data is accurate. That is, the accuracy of the analog to digital conversion, for example, a resolution of 14 bits, is determined by the oversampling ratio. Therefore, the oversampling ratio is increased as the frequency of the signal becomes lower. As a result, the analog signal is converted into digital form at higher resolution.

On the other hand, the output from the Σ-Δ modulator 52 can also be converted into a digitally coded signal by the use of the band-pass filter 53. However, the quantization error is large, because the high-frequency signal components are sampled at a small oversampling ratio and then arithmetically processed. The data is then converted into digital form. Consequently, the accuracy of the digital data is low. Thus, the high-frequency components are converted at an accuracy of, for example, 6 bits. In this way, in the oversampled analog-to-digital converter, the conversion accuracy is 6 bits at 10 KHz such as at the point B1 for the high-frequency components and 14 bits at 100 Hz such as at the point B5 for the low-frequency components as shown in Fig. 7.

In the example described thus far, an oversampled ADC is used as the ADC 52 of the receiving circuit portion. Similar advantages, i.e., that the requisite functions can be attained economically, are obtained by using an oversampled DAC as the DAC 69 of the transmission circuit part. Fig. 22 shows a commonplace oversampled digital-to-analog converter. The Σ-Δ modulator is similar in configuration to the Σ-Δ modulator shown in Fig. 3.

In the example described in conjunction with Figs. 1, 2, and 3, two filters are provided. More filters may be provided to select plural kinds of information about frequencies. In this case, a high-pass filter cannot be used as the filter 53 as mentioned previously; a band-pass filter must be used. In the above example, communication information is transferred by FSK modulation. It is to be noted that the modulation is not limited to FSK modulation.

In the description made in connection with Figs. 1 and 2, it is assumed that the transmitter 6 is connected with the signal conditioner 50 via a three-line transmission path. In particular, a power supply line (not shown) is connected from the signal conditioner 50 to the transmitter 6, in addition to the illustrated lines 101 and 102. The power supply part of the signal conditioner 50 shown in Fig. 1 is omitted.

Fig. 8 shows a configuration in which the transmitter 6 is connected via a two-line transmission path 91. The configuration shown in Fig. 8 is similar to the configuration shown in Fig. 1 except that the signal conditioner 50 and the transmitter 6 are interconnected via the two-line transmission path 91 and that a power supply part 92, a DC/DC converter 93, a control circuit 94, and a photocoupler 96 are added. It is to be noted that in Fig. 1, the digital signal processing parts 61, 70, the interfaces 64, 78 are represented by separate functional blocks. In Fig. 8, these are represented by a single block.

The signal conditioner 50 shown in Fig. 8 is now described. The DC/DC converter 93 converts a DC voltage VM applied between terminals P12 and P13 into a different value of DC voltage Vcc, and delivers this voltage. This converter 93 can be of the conventional structure. For example, the converter 93 comprises a switch SW5, a transformer T, a rectifying diode D1, a smoothing capacitor C1, and other components.

The control circuit 94 controls the amplitude of the output voltage Vcc from the DC/DC converter 93 in response to a signal S16 applied from the control unit 1. The control circuit 94 receives the signal S2 from the digital signal processing part 61, the signal S2 being obtained by a measurement. As an example, if a short circuit occurs in the transmitter 6, the signal S2 assumes an abnormal value. This is detected, and the output voltage Vcc is reduced quickly to prevent unwanted power loss.

One example of the method of controlling the value of the output voltage Vcc is described now. The control circuit 94 controls the ratio of the time for which the switch SW5 of the DC/DC converter 93 is turned on to the time for which the switch is turned off as shown in Fig. 20. Consequently, the electric power supplied to the transformer T is controlled. The voltage developed on the secondary side of the transformer T changes according to this ratio.

Fig. 20 shows the on state and the off state of the switch SW5. When the solid line goes high, the switch SW5 is turned on. In the case of Fig. 20(a), the maximum output voltage Vcc is obtained. As the ratio of the time for which the switch SW5 is turned on increases, the output voltage Vcc decreases. If the number of on states is controlled to a ratio of 3/8 as shown in Fig. 20(c), then the output power is limited to 3/8 of the full power.

The power supply part 92 receives the constant DC voltage Vcc from the DC/DC converter 93 and produces a voltage, for example 24V, at its output terminal P10, the voltage being instructed by a control signal S17 applied from the control circuit 94. That is, the control signal S17 indicates the output voltage (in volts) or output current (in milliamperes) from the power supply part 92.

It is assumed that the transmitter 6 is able to carry the value obtained by a measurement, e.g., 4 to 20 mA, on the high-frequency communication information as described in connection with Fig. 4 and to deliver the information containing the value.

The input circuit 51 has the resistor R, for example, between the input terminal P1 and a common potential. The low-frequency signal of 4 to 20 mA supplied from the transmitter 6 and the high-frequency signal which is superimposed on the low-frequency signal are converted into a voltage signal by the resistor R. This voltage signal is amplified so as to produce the signal SG of an appropriate amplitude by the amplifier. The output from the amplifier is fed to the ADC 52.

In this configuration of Fig. 8, a voltage or current is supplied from the power supply part 92 to the transmitter 6 via one line of the two-line transmission path 91, while the signals from the transmitter 6, i.e., the value obtained by a measurement and communication information, are furnished to the input circuit 51 via the other line.

Fig. 9 shows a specific example of the power supply part 92 and the input circuit 51 or the output circuit 68 shown in Fig. 8. In Fig. 9, almost all the components are used in common, and the switch SW3 is switched between two different states. In one state, this configuration functions to supply electric power to the transmitter 6. Also, it acts as the input circuit 51 receiving the transmission signal from the transmitter 6. In the other state, the configuration serves as the output circuit 68 sending the output signal SB to the actuator 7.

Referring particularly to Fig. 9, a transmission path is connected with a pair of external terminals T1 and T2. An input circuit 111 receives the current flowing through the transmission path, or the current flowing between the terminals T1 and T2. In this example, a resistor R is connected between the terminal T2 and a common potential. The resulting voltage drop is exploited to extract the received signal. This input circuit 111 corresponding to the input circuit 51 of Fig. 1 may use an element other than the resistive element R.

A regulator 112 is designed to operate either in a constant current mode in which the regulator produces a constant current to the external terminals T1 and T2 or in a constant voltage mode in which the regulator produces a constant voltage to these terminals. The regulator 112 consists of a transistor Q1 and an amplifier U1 whose output terminal is connected with the base of the transistor Q1. The collector of this transistor Q1 is connected with the DC voltage Vcc, while the emitter is connected with the external terminal T1.

A mode switching circuit 113 comprises a setting means 114, a signal output means 115, and a switch SW3. This switching circuit 113 switches the regulator 112 between the constant voltage mode and the constant current mode, depending on the kind of the field apparatus connected with the external terminals T1 and T2.

The setting means 114 connects the switch SW3 either to a contact a1 or to a contact a2 under the instructions from the control unit 1 shown in Fig. 8. Thus, the regulator 112 is operated either in the constant current mode or in the constant voltage mode.

The signal output means 115 may or may not apply a signal of a given amplitude to one input terminal (+) of the amplifier U1, depending on the mode set by the setting means 114. As an example, the signal output means 115 consists of a digital-to-analog converter.

Voltage-dividing resistors R1 and R2 are connected between the output terminal T1 and the common potential. The signal received by the resistor R of the input circuit 111 appears at a signal takeout terminal T4. A signal application terminal T3 is connected with one input terminal (+) of the amplifier U1 of the regulator 112. A signal which is to be transmitted either to the transmitter 6 or to the actuator 7 shown in Fig. 8 is applied to this signal application terminal T3 from the control circuit 94.

Where the circuit of Fig. 9 is operated as the output circuit 68 shown in Fig. 8, said signal to be transmitted is the signal S14 that is created either from the actuator control signal S9 delivered from the control unit 1 or from the communication information S8. In this case, the signal output means 115 shown in Fig. 9 acts also as the DAC 69 shown in Fig. 8.

Where the circuit shown in Fig. 9 is used to supply electric power and also used as the input circuit 51, said signal to be transmitted comprises a voltage, say 24 V, or a current, say 4 mA, to be supplied to the connected transmitter 6 to power it, together with communication information S8 (Figs. 8 and 14) transferred from the control unit 1 to the transmitter 6.

The common terminal of the switch SW3 is connected with the other input terminal (-) of the amplifier U1. The contact a1 is connected with the junction of the voltage-dividing resistors R1 and R2. The contact a2 is connected with one end of the resistor R of the input circuit 11. The switch SW3 is actuated by the setting means 114.

When the switch SW3 is connected with the contact a1, the voltage-dividing resistor R1 acts as a feedback resistor for the amplifier U1. The input terminal (-) of the amplifier U1 is coupled to the common potential via the resistor R2. The result is that the regulator 112 operates in a constant voltage output mode in which the amplification degree is given by $\{1 + (R1/R2)\}$.

On the other hand, when the switch SW3 is connected with the contact a2, the regulator operates in a constant current output mode for the following reason. The two input terminals (+) and (-) of the amplifier U1 are substantially at equipotential as long as the amplifier U1 operates normally. Let e be the voltage developed between the two input terminals (+) and (-) of the amplifier U1. Let Vout be the output voltage from the regulator 112. The following relation holds:

$$Vout = A \cdot e$$

where A is the gain of the open loop in the regulator 112 and normally 80 dB. Since the output voltage Vout is 24 V, for example, e is calculated at about 0 V from the above equation. Therefore, if a constant voltage $E_o$ is applied to the terminal T3 from the control circuit 94 of Fig. 8, then this constant voltage is kept applied to the resistor R via the contact a2 of the switch SW3. Thus, it follows that a current given by $I_{in} = E_o/R$ keeps flowing through the resistor R. Because this current $I_{in}$ is supplied from the terminal T2, the constant current $I_{in}$ is fed to the transmitter connected between the terminals T1 and T2. The circuit of Fig. 9 constructed in this way operates either in a first mode or in a second mode. In the first mode, electric power is supplied to the transmitter 6, and the circuit of Fig. 9 operates as the input circuit 51 receiving the signal transferred from the transmitter 6. In the second mode, the circuit operates as the output circuit 68 delivering an output signal to the actuator 7. These two modes are described below separately.

[The first mode in which a constant voltage is supplied to the transmitter 6, and the circuit of Fig. 9 operates as a circuit receiving the current signal from the transmitter 6.] Fig. 10 shows the connection establishing this first mode. The relation of the components shown in Fig. 10 to the components shown in Fig. 8 is described now. The external terminal T1 of Fig. 10 corresponds to the terminal P10 of Fig. 8. The external terminal T2 of Fig. 10 corresponds to the terminal P1 of Fig. 8. The part formed by the regulator 112, the resistors R1, R2, the switch SW3, and the mode switching circuit 113 shown in Fig. 10 corresponds to the power supply part 92 of Fig. 8. The input circuit 111 of Fig. 10 corresponds to the input circuit 51 of Fig. 8. The power voltage Vcc shown in Fig. 10 corresponds to the output voltage Vcc from the DC/DC converter 93 shown in Fig. 8.

The transmitter 6 is connected between the external terminals T1 and T2 shown in Fig. 10 via the transmission path 91 to deliver the current signal $I_{in}$. The setting means 114 connects the switch SW3 to the contact a1. Thus, the voltage divided by the dividing resistors R1 and R2 is fed back to one input terminal (-) of the amplifier U1 of the regulator 112. The regulator 112 operates in the constant voltage output mode. The signal output means 115 delivers a given voltage signal Vi to the other input terminal (+) of the amplifier U1. In this way, the output voltage Vout produced between the external terminal T1 and the common potential is maintained at a constant voltage, for example 24 V, corresponding to the given voltage signal Vi by the regulator 112. That is, the output voltage Vout appearing at the terminal T1 is given by

$$Vout = Vi \cdot \{1 + (R2/R1)\}$$

The transmitter 6 controls the current flowing through the transmission path 91 according to the process control amount, so that a process control signal is applied to the terminal T2. Specifically, the process control signal, or the current $I_{in}$, transmitted via the transmission path 91 flows through the resistor R of the input circuit 111, thus producing a voltage Eout corresponding to the process control amount. This signal Eout is extracted from the received signal takeout terminal T4 and amplified so as to produce the voltage signal SG of an appropriate amplitude by an amplifier (not shown). The output signal from the amplifier is supplied to the ADC 52 of Fig. 8.

[The second mode in which the circuit of Fig. 9 acts as the circuit delivering a current signal to the actuator 7. That is, the circuit operates as the output circuit 68.] Fig. 11 shows the connection establishing this second mode. The relation of the components shown in Fig. 11 to the components shown in Fig. 8 is described now. The external terminal T1 of Fig. 11 corresponds to the terminal P5 of Fig. 8. The external terminal T2 of Fig. 11 corresponds to the terminal P6 of Fig. 8. The part formed by the regulator 112, the resistors R1, R2, R, the switch SW3, and the mode switching circuit 113 shown in Fig. 11 corresponds to the output circuit 68 of Fig. 8. The signal output means 115 of Fig. 11 corresponds to the DAC 69 of Fig. 8. The power voltage Vcc shown in Fig. 11 corresponds to the output voltage Vcc from the DC/DC converter 93 shown in Fig. 8.

The actuator 7 is connected between the external terminals T1 and T2 via the transmission path 95. The setting means 114 connects the switch SW3 to the contact a2. Thus, the resistor R is connected as a feedback resistor to one input terminal (-) of the amplifier U1 of the regulator 112. The regulator 112 operates in the constant current output mode. In this state, a signal Vs to be transferred to the actuator 7 is applied to the terminal T3 which is connected with the other input terminal (+) of the amplifier U1. As such, the regulator 112 controls the output current $I_{out}$ in response to the signal Vs, the current $I_{out}$ being fed to the actuator 7 from the external terminal T1. This output current Iout is given by

$$I_{out} = Vs/R$$

In this way, the circuit of Fig. 9 can use the same main components, irrespective of whether the circuit operates in the first mode or in the second mode described above. In addition, the operation mode can be switched by easily operating the mode switching circuit 113.

In the example described above, the typical transmitter 6 and the actuator 7 are interconnected. In the field, a transmitter or sensor producing a voltage signal and an actuator actuated by the voltage signal are added to the above-described components. The circuit of Fig. 9 can cope with the situation where these transmitter, sensor, and actuator are added. The operation performed under this condition is next described.

[The mode in which the circuit of Fig. 9 is operated as an input circuit receiving a voltage signal delivered from a transmitter or sensor.]

Examples of these transmitter and sensor are shown in Fig. 19, (a) and (b). Fig. 19(a) shows the case in which a sensor consisting of a thermocouple is employed. The thermocouple applies a voltage Vp of several millivolts to the external terminals T1 and T2 of Fig. 9. The thermocouple is not required to be electrically powered.

Fig. 19(b) shows the situation in which a potentiometer is used as the transmitter. The sliding contact of the potentiometer is driven according to the process control amount. In this case, it is necessary that the potentiometer be supplied with the constant current $I_{out}$ (normally 4 mA) from the signal conditioner. As a result, the potentiometer applies a voltage given by $Vp = rp \cdot I_{out}$ to the external terminals T1 and T2, where rp is the resistance of the potentiometer. When this thermocouple or potentiometer is connected with the external terminals T1 and T2, the circuit of Fig. 9 is connected and designed as shown in Fig. 12.

First, the operation performed when the thermocouple shown in Fig. 19(a) is connected with the external terminals T1 and T2 of Fig. 12 is described. In this case, the thermocouple is connected with the signal conditioner. The control circuit 1 causes the mode setting means 114 to connect the switch SW3 to the contact a2. Thus, the resistor R is connected as a feedback resistor with one input terminal (-) of the amplifier U1 of the regulator 112. The signal output means 115 applies a signal Vis to the other input terminal (+) of the amplifier U1 to cut off the regulator 112. Since the transistor Q1 is biased off, no electric power is supplied from the external terminal T1 to the thermocouple. In this manner, the voltage signal Vp sent from the thermocouple of Fig. 19(a) via the transmission path 91 is taken out as the voltage $V_{out}$ from the terminal T5 connected with the external terminal T1.

$$V_{out} = Vp \cdot (R1 + R2)/ (R + R1 + R2)$$

The voltage $V_{out}$ appearing at the terminal T5 is amplified by a variable gain amplifier (indicated by 131 in Fig. 21) and fed to the ADC 52 shown in Fig. 8.

The operation performed when the potentiometer shown in Fig. 19(b) is connected with the external terminals T1 and T2 shown in Fig. 12 is next described. In this case, the potentiometer is connected with the signal conditioner. In the same way as in the case in which the thermocouple is used, the setting means 114 connects the switch SW3 to the contact a2 under the control of the control unit 1. The signal output means 115 applies the voltage Vis to the input terminal (+) of the amplifier U1. The value of the voltage Vis is given by $Vis = 4mA \cdot R$. That is, the regulator 112 operates as a constant current source delivering an electrical current of 4 mA. In consequence, the potentiometer applies a voltage ($Vp = rp \cdot 4mA$) to the external terminals T1 and T2. This voltage Vp is taken as the voltage $V_{out}$ from the terminal T5 in the same way as in the case in which the thermocouple is used.

The above-described voltage $V_{out}$ taken from the terminal T5 means the output signal Vp from the thermocouple or potentiometer. In this manner, the circuit of Fig. 9 can accommodate itself to a transmitter or sensor which produces a voltage signal such as a thermocouple or potentiometer without the need to change the essential circuit configuration, by operating the setting means 114 in a straightforward manner.

[The mode in which the circuit of Fig. 9 is operated as the output circuit 68 delivering an actuator control signal of a constant voltage.] To actuate the actuator 7, a voltage signal (for example, $V_{out}$ = 1 to 5 V) must be applied to it. The circuit of Fig. 9 is connected as shown in Fig. 13. The actuator 7 which operates on the voltage signal of 1 to 5 V, for example, is connected between the external terminals T1 and T2 shown in Fig. 13 via the transmission path 95. In this case, the setting means 114 connects the switch SW3 to the contact a1 under the instructions from the control unit 1 shown in Fig. 8. The voltage divided by the resistors R1 and R2 is fed back to the input terminal (-) of the amplifier U1 and so the regulator 112 operates in the constant voltage mode. Since the voltage Vs is applied to the other input terminal (+) of the amplifier U1 via the terminal T3, the output voltage $V_{out}$ from the regulator 112 is given by

$$V_{out} = Vs \cdot \{ 1 + (R1/R2)\}$$

That is, a voltage is applied to the terminal T3 of Fig. 13 from the control circuit 94 shown in Fig. 8 such that the $V_{out}$ above assumes a value of 5 V, for example.

In the description made thus far, the assumption R << RA is made, where RA is the internal resistance of the actuator 7. Where this resistance R is not negligible, the voltage signal developed between both ends of the resistor R is taken from the terminal T4 as shown in Fig. 13 to correct the value of the voltage Vs applied to the input terminal (+) of the amplifier U1. In this way, the circuit of Fig. 9 can treat a voltage signal with the same circuit configuration by operating the setting means 114 in a straightforward fashion.

Fig. 14 shows an example of the connection made when a combination of a low-frequency signal, such as a DC power signal or a signal obtained by a measurement, and modulated wave, or communication information, is transferred through a two-line transmission path 91. The relation of the configuration of Fig. 14 to the configuration of Fig. 8 is described now. The configuration of Fig. 14 does not use the output circuit 68 of Fig. 8. In Fig. 14, the output S14 from the DAC 69 is fed to the power supply part 92.

The interconnection in the power supply part 92 shown in Fig. 14 is described now by referring to Fig. 9. The control circuit 94 of Fig. 14 applies a signal S17 to the terminal T3 of Fig. 9. The DAC 69 corresponds to the signal output means 115 of Fig. 9. The interconnection shown in Fig. 8 can be easily changed to the interconnection shown in Fig. 14 under the instructions from the control unit 1. Of course, the electrical circuit components shown in Fig. 14 are the same as those of Fig. 8.

The operation of the signal conditioner 50 shown in Fig. 14 is now described. It is necessary that the transmitter 6 of Fig. 14 be supplied with a constant voltage of, for example, 24 V, from a direct current power supply. It is assumed that the transmitter 6 of Fig. 14 is capable of receiving communication information M1 carried by a high frequency or a modulated wave superimposed on this voltage of 24 V. It is also assumed that this transmitter 6 can send a combination of the low-frequency signal of 4 to 20 mA and the communication information M2 carried by the high-frequency signal or modulated wave to the input circuit 51, the low-frequency signal being obtained by a measurement. One example of the communication information M1 sent from the signal conditioner 50 to the transmitter 6 is information about instructions for modifying the measuring range of the transmitter 6. One example of the communication information M2 sent from the transmitter 6 to the signal conditioner 50 is information indicating the measuring range that is a response to the aforementioned communication information M1.

In this case, the power supply part 92 of Fig. 14 is connected as shown in Fig. 10 under the control of the control unit 1. The regulator 112 delivers a constant DC voltage ($V_{out}$= 24 V) from the external terminal T1. The control unit 1 produces the transmitted signal S8. For example, it delivers digital information M1 indicating the measuring range L1 of the transmitter 6.

The transmitted signal S8, or communication information, which is produced from the control unit 1 and indicates the measuring range L1 is supplied to the digital signal processing part 70 via the photocoupler 75 and the interface 78. The signal is then changed into a digitally modulated signal S12 indicating the communication information M1 inside the processing part 70 (see Fig. 1). The signal S12 is fed to the DAC 69 via the adder 71.

The DAC 69 converts the digitally modulated, digitally coded signal into analog form, e.g., the FSK modulated wave described in connection with Fig. 5. The resulting analog signal is fed to the power supply part 92. A voltage signal $E_o$ for producing a direct current of 24 V is applied to the input terminal (+) of the amplifier U1 of the power supply part 92 connected as shown in Fig. 10. Also, the DAC 69, i.e., the signal output means 115, applies a high-frequency signal (Fig. 5(b)) to the same input terminal (+). As a result, the constant DC voltage of 24 V on which the high-frequency signal shown in Fig. 5(b) is superimposed is supplied to the transmitter 6 from the terminal P10 of Fig. 14 through the transmission line 102.

The transmitter 6 is powered with the direct current of 24 V,supplied via the transmission line 102. The transmitter demodulates the modulated wave superimposed on this direct current, and sets its range to the measuring range L1 indicated by the communication information M1. The transmitter 6 converts a value measured in the field into a low-frequency signal of 4 to 20 mA, and applies a current $I_{in}$ to the external terminal T2 shown in Fig. 10. The current $I_{in}$ is obtained by superimposing the high-frequency signal, or modulated wave signal, indicating the set measuring range on the low-frequency signal. The current $I_{in}$ containing a combination of these two kinds of signals is converted into a voltage signal by the resistor R and appears at the terminal T4. This voltage signal is then amplified by an amplifier (not shown) and fed to the ADC 52.

After the signal passes through the ADC 52, the photocoupler 65 produces a high-frequency signal S5 indicating the measuring range set by the transmitter 6. The photocoupler 66 produces a measurement signal S6 indicating the value obtained by the transmitter 6. The operation has been described already in detail in connection with Fig. 1.

Where the signal conditioner 50 is connected as shown in Fig. 14, supply of DC electric power, transmission of the value obtained by a measurement, and bidirectional communication can be simultaneously effected by interconnecting the control unit 1, or the signal conditioner 50, and the transmitter 6 via only the two transmission lines. Furthermore, the configuration can be modified to the configuration shown in Fig. 14 without adding electrical circuit components to the configuration of Fig. 8. This modification can be readily made according to the control signal from the control unit 1.

It may be difficult to understand the operation of this configuration, because reference must be made to both Figs. 14 and 10. Accordingly, we have created Fig. 15 from the main portions of Figs. 14 and 10. The reason why supply of DC electric power, transmission of the value obtained by a measurement, and bidirectional communication can be simultaneously effected by interconnecting the control unit 1, or the signal conditioner 50, and the transmitter 6 via only the two transmission lines is next described in greater detail by referring to Fig. 15.

In Fig. 15, a power supply output controller 120 receives the output signal S14 from the DAC 69 shown in Fig. 14, the output signal S14 being a transmitted signal of a high frequency. The controller 120 controls, for example, the output voltage E from a variable DC power supply Es according to the signal S14. The controller 120 consists of an operational amplifier U2, for example. The signal S14 is applied to one input terminal (-). Applied to the other input terminal (+) of the amplifier U2 is a voltage signal $E_o$ determining the output voltage value E of the power supply Es. This voltage signal $E_o$ is equivalent to the signal $E_o$ applied to the terminal T3 shown in Fig. 10.

The variable DC power supply Es is made up of transistors Q3 and Q4 whose collectors are connected with a power supply Vcc and a common potential, respectively. The emitters of the transistors Q3 and Q4 are connected with one transmission path 91. This power supply Es is equivalent to the transistor Q1 shown in Fig. 10. The power voltage Vcc shown in Fig. 15 is the same as the power voltage Vcc shown in Fig. 10.

A transmission block 80 is composed of a transmitter 6 and a voltage change detector 121. In the transmitter 6 shown in Figs. 1, 8, and 14, the voltage change detector 121 shown in Fig. 15 is not shown. The detector 121 incorporates a microprocessor, extracts the high-frequency components, or signal S14, contained in the DC voltage E applied from the signal conditioner 50, and controls the transmitter 6 according to the information M1 indicated by the signal S14.

The transmitter 6 delivers a low-frequency current of 4 to 20 mA according to the value measured in the field. The voltage change detector 121 superimposes the high-frequency signal, or the modulated signal, on the low-frequency current produced from the transmitter 6 and sends the resulting signal back to the signal conditioner 50, the high-frequency signal containing information M2 responding to the information M1 supplied from the signal conditioner 50.

A resistor R is used to extract the signal $I_{in}$ as a voltage signal VR, the signal $I_{in}$ being transmitted via the transmission path 91. This resistor R is equivalent to the resistor R shown in Fig. 10.

The voltage VR obtained by this resistor R is applied to a low-pass filter 55 and also to a band-pass filter 53. The low-pass filter 55 produces a signal SE of 4 to 20 mA, the signal SE indicating the value obtained by a measurement. The band-pass filter 53 produces the component SD (Fig. 1) of the high-frequency signal. In Fig. 15, an amplifier for amplifying the voltage signal VR from the resistor R and the ADC 52 shown in Figs. 1, 8, 14 are omitted.

The operation of the configuration shown in Fig. 15 is now described by referring to Fig. 16. Fig. 16(a) shows the signal S14 shown in Fig. 15. In this example, the signal varies in positive and negative directions. The operational amplifier U2 receives the signal S14 shown in Fig. 16(a) and the constant voltage signal $E_o$, and controls the output voltage E from the variable DC power supply Es according to the difference between them. In this way, the output voltage E delivered to the transmission path 91 from the power supply Es changes in response to the high-frequency signal S14 while this signal S14 whose voltage amplitude is indicated by Vd1 is being produced as shown in Fig. 16(b). The voltage E delivered from the variable DC power supply Es can be given by

$$E = E_o + Vd1 \quad (1)$$

The transmission block 80 varies the current $I_{in}$ flowing through the transmission path 91 according to the process control amount. The transmitted current $I_{in}$ varies in an analog manner within the range, for example, from 4 to 20 mA, according to the process control amount as shown in Fig. 16(c). This current $I_{in}$ is sent to the signal conditioner 50 via the transmission path 91 and flows into the resistor R. A voltage signal VR as shown in Fig. 16(d) is produced across the resistor R by the transmitted current $I_{in}$. This voltage signal VR can be given by

$$VR = R \cdot I_{in} \quad (2)$$

From equations (1) and (2), the voltage VL applied across the transmission block 80 connected with the two-line transmission path 91 can be given by

$$\begin{aligned} VL &= E - VR \\ &= E_o + Vd1 - R \cdot I_{in} \end{aligned} \quad (3)$$

This voltage VL assumes a waveform as shown in Fig. 16(e). In this way, the voltage VL applied to the transmission block 80 varies according to the high-frequency signal S14. The voltage change detector 121 included in the transmission block 80 detects the change in the voltage VL and extracts the high-frequency signal S14 sent from the signal conditioner 50. Then, the information M1 indicated by this signal S14 is read, and the transmission 6 is controlled according to the information M1. The voltage VL produced across the transmission block 80 is so high that a rated voltage high enough to operate the transmission block 80 is maintained if the flowing transmission current $I_{in}$ assumes its maximum value, e.g., 20 mA.

The high-frequency modulated signal S20, or communication signal, which is transmitted from the transmission block 80 to the signal conditioner varies the transmitted current $I_{in}$ in positive and negative directions, for example, as shown in Fig. 16(c). This high-frequency signal S20 induces changes in the voltage VR developed across the resistor R. The low-signal, or a signal indicating the value obtained by a measurement, which is sent from the transmission block 80 and corresponds to the process control amount is passed through the low-pass filter 55, thus resulting in a signal SE shown in Fig. 16(f), where the signal SE delivered from the filter 55 takes an analog waveform. In practice, however, the signal SE is a digitally coded signal indicating each instantaneous value of the amplitude of the analog waveform.

The high-frequency modulated signal S20, or communication signal, sent from the transmission block 80 is passed through the band-pass filter 53, whereby a signal SD shown in Fig. 16(g) is extracted. In Fig. 16(g), the signal SD produced from the filter 53 is shown to assume an analog waveform. In practice, however, it is a digitally coded signal indicating each instantaneous value of the amplitude of the analog waveform.

In the configuration of Fig. 15, the resistor R is inserted in series with the two-line transmission path 91 and, therefore, the power voltage VL applied to the transmission block 80 is reduced accordingly. In particular, the power voltage VL applied to the transmission block 80 is given by

$$VL = E - I_{in} \cdot R \quad (4)$$

Therefore, it is necessary to design the electronic circuits to maintain normal operation if the transmission current $I_{in}$ assumes its maximum value, for example, 20 mA. The configuration of Fig. 17 solves this problem. In Fig. 17, the resistor R is connected between the output terminal and the input terminal (-) of the amplifier U3. The input terminal (+) of the amplifier U3 is connected with the common potential. In this configuration, the input terminal (-) of the amplifier U3 can be regarded as the common potential, or virtual ground point. Thus, we have

$$VL = E$$

The actual control signal of 4 to 20 mA can be sent from the control unit 1 to the actuator 7 by connecting the actuator 7 between the terminals P10 and P1 via the two-line transmission path 95 without changing the structure of the signal conditioner shown in Fig. 14. At the same time, bidirectional communication can be effected between the control unit 1 and the actuator 7. Where the circuit configuration of Fig. 18 is operated, the power supply part 92 is connected with the configuration shown in Fig. 11. In this case, the switch SW3 is connected with the contact a2, so that the power supply part 92 operates in the constant current output mode.

The connection of the power supply part 92 shown in Fig. 18 is now described by referring to Fig. 11. A terminal T3 shown in Fig. 11 is connected with a control circuit 94 shown in Fig. 18. In this case, the signal S17 from the control circuit 94 is 0, i.e., S17 = 0. A DAC 69 shown in Fig. 18 corresponds to the signal output means 115 shown in Fig. 11. That is, only the signal S14 from the signal output means 115, or the DAC 69 of Fig. 18, is applied to the input terminal (+) of the amplifier U1 of Fig. 11.

As described previously, this signal S14 is an analog voltage signal in which the low-frequency voltage signal corresponding to the current of 4 to 20 mA is multiplexed with the modulated high-frequency voltage signal indicating the communication information M1. This information M1 is transmitted from the control unit 1 to the actuator 7. In Fig. 18, the communication information M1 originates from the signal S8 delivered from the control unit 1.

The regulator 112 shown in Fig. 11 operates in the constant current output mode. Let V14 be the voltage of the signal S14. The current Iout produced from the regulator 112 is given by

$$Iout = V14/R$$

As a result, as described within Fig. 18, the power supply part 92 produces a signal in which low-frequency current components ia (corresponding to 4 to 20 mA) and high-frequency current components ib (corresponding to the communication information) are superimposed.

The actuator 7 is actuated with the incoming low-frequency current components ia. The receiving circuit 7a produces a modulated signal Vin to the terminal P1, the signal Vin containing information M2 about the response to the incoming communication information M1.

This modulated signal Vin is fed to the input circuit 51. The digital signal processing part 61 extracts the signal S1 indicating the information M2 (see Fig. 1) by performing the above-described operation. The signal S5 indicating the information M2 is sent to the control unit 1.

In the configuration of Fig. 18, the signal Vin sent from the actuator 7 contains only the communication information and so only the filter 53 of the two filters 53 and 55 included in the digital signal processing part 61 operates.

Fig. 21 shows a circuit configuration similar to the portion of the circuit configuration of Fig. 1 which begins with the input terminal P1 receiving the signal SA and ends with the outputs of the digital demodulator 54 and of the digital filter 55. The demodulator 54 delivers the communication information S1. The output from the filter 55 is the signal SE indicating the value obtained by a measurement. In Fig. 1, the band-pass filter 53, which can be replaced with a high-pass filter, and the low-pass filter 55 are connected in parallel. On the other hand, in Fig. 21, two digital low-pass filters 132 and 133 are connected in series. Even with this configuration of Fig. 21, the low-frequency signal SE and the high-frequency communication information S1 can be separately extracted.

Referring still to Fig. 21, an input terminal P1 corresponds to the input terminal P1 shown in Fig. 1. A resistor R is connected between the input terminal P1 and the common potential via a switch 136. This switch 136 is turned on and off under the control of the control unit 1 of Fig. 1. A signal in which a low-frequency signal ea indicating the value obtained by a measurement as shown in Fig. 22(a) and a high-frequency communication signal eb are superimposed is applied to this input terminal P1. It is assumed that the low-frequency signal ea of Fig. 22(a) and the frequency components contained in the communication signal eb lie within a frequency range lower than a frequency fw shown in Fig. 23.

Normally, a variable gain amplifier 131 amplifies the voltage developed across the resistor R to a voltage level, e.g., 1 V, which can be easily treated by the next stage of electronic circuit. The amplification degree of this amplifier 131 is controlled by the control unit 1 of Fig. 1.

The output from the variable gain amplifier 131 is applied to the Σ-Δ modulator 52, where the signal is converted into digital form. The modulator 52 is an oversampled analog-to-digital converter. Since this modulator has been already described in connection with Fig. 3, it is not described here. The sampling frequency of the modulator 52 is kept at a given frequency, for example, 1 MHz. The output from the modulator 52 is supplied to the low-pass filter 132.

This low-pass filter 132 calculates the moving average of the plural, for example 32, successive digital codes produced from the Σ-Δ modulator 52. In particular, the modulator 52 produces digital codes, each assuming level 1 or 0, at intervals of 1 MHz, or 1 μsec. The low-pass filter 132 totalizes the 32 successive digital codes and then divides the calculated value by 32 to compute the average value. This series of operations is repeated for every input coded signal. Thus, the moving average of the digital codes is calculated.

The low-pass filter 132 operating in this way exhibits an attenuation characteristic 140 shown in Fig. 23. The output signal, indicated by S30, from this filter 132 is a digitally coded signal (Fig. 22(b)) containing both a low-frequency signal ea indicating the value obtained by a measurement and a high-frequency communication signal eb.

The value of the corner frequency fw of the filter characteristic 140 shown in Fig. 23 can be varied by replacing the aforementioned value "32" with a different value. This modification can be made in response to a signal from the control unit 1. The control unit 1 can set the corner frequency to such a value, e.g., 32, that the high-frequency signal eb sent to the terminal P1 is not cut by this low-pass filter 132.

The posterior low-pass filter 133 accepts the output data from the anterior low-pass filter 132 and calculates the moving average of the eight, for example, successive digital codes delivered from the front filter 132. In particular, the posterior filter 133 totalizes the 256 ($32 \times 8 = 256$) successive digital codes delivered from the $\Sigma$-$\Delta$ modulator 52 and divides the calculated value by 256. That is, the posterior filter 133 takes the moving average of the 256 digital codes and, therefore, this filter extracts signals of only those frequencies which are lower than those extracted by the front low-pass filter 132.

The posterior low-pass filter 132 which operates as described above shows an attenuation characteristic 141 whose corner frequency is indicated by fu in Fig. 23. That is, the output signal SE from the posterior filter 132 is a digitally coded signal as shown in Fig. 22(c) which does not contain the high-frequency signal eb but contains only the low-frequency signal ea indicating the value derived by a measurement. The characteristic of this posterior filter 133 can also be easily modified by the control unit 1, in the same way as the foregoing. As a result, the posterior low-pass filter 133 produces the low-frequency components (or a signal indicating the value obtained by a measurement; for example, a current of 4 to 20 mA) which are contained in the signal SA applied to the input terminal P1.

Meanwhile, the high-frequency components, or the communication information, are extracted via a digital comparator 134 and a digital demodulator 135. The comparator 134 compares the signal S30 shown in Fig. 22(b) and the signal SE shown in Fig. 22(c). The digital comparator 134 compares the signal S30 shown in Fig. 22(b) with the signal SE shown in Fig. 22(c). The comparator 134 produces a signal S31 whose code value varies whenever the signal S30 crosses the signal SE. The signal S31 indicates the period of the signal eb shown in Fig. 22(b). The digital demodulator 135 can detect the frequency of the high-frequency signal eb, i.e., can demodulate the communication information S1 according to the period.

The circuit configuration shown in Fig. 21 where the two low-pass filters are connected in series yields the following advantages. A digital low-pass filter is simpler in hardware structure than a digital band-pass filter and a digital high-pass filter and can be made up of a less number of electronic circuit elements than the latter filters. That is, the configuration shown in Fig. 21 permits the novel signal conditioner to be easily fabricated in the form of an IC. In this way, the high-frequency communication information S1 is extracted from the demodulator 135, whereas the low-frequency signal SE indicating the value obtained by a measurement is derived from the posterior low-pass filter 133.

As described thus far, the present invention yields the following advantages.

(1) It is possible to accommodate various transmitters and various actuators simply by preparing a few kinds of signal conditioners, or a few kinds of hardware.

This is now described in detail. A signal supplied from a transmitter or sensor is converted into a voltage signal exceeding a certain level by the input circuit 51. This voltage signal is all converted into digital form by the ADC 52. Therefore, a digital signal corresponding to the output signal from the transmitter or sensor is obtained from the ADC 52, irrespective of what transmitter or sensor is connected with the signal conditioner. Thus, the digital signal produced by the ADC 52 contains information indicating the value obtained by a measurement, as well as communication information. The digital signal processing parts 61 and 70 extract the value obtained by a measurement and communication information, by performing digital arithmetic operations on the digital signal fed from the ADC 52, the arithmetic operations being adapted for the kind of the connected transmitter. The contents of the digital arithmetic operations performed by the digital signal processing parts 61 and 70 can be changed by software.

In brief, in accordance with the present invention, the output from every transmitter or sensor is all converted into digital form. Then, digital arithmetic operations suited to the kind of the connected transmitter or sensor are performed on the resulting digital signal. In this way, the value obtained by a measurement and the communication information are extracted. Since the contents of the digital arithmetic operations can be modified by software, the inventive signal conditioners which are few in kind can adapt themselves to varied transmitters and actuators.

The power supply part 92 shown in Fig. 9 can be switched to any of the various circuits of different functions shown in Figs. 10-13 by using almost all the circuit elements of Fig. 9 in common. This also permits the few kinds of signal conditioners to accommodate various transmitters and actuators. Heretofore, the present applicant has prepared quite numerous kinds of signal conditioners. In accordance with the invention, all of them can be replaced with only one kind of hardware. Hence, the invention yields great advantages.

(2) Signals can be appropriately transmitted and received whether the connected transmitter or actuator has communication function or does not.

(3) The analog signal processing parts of the prior art apparatus can be replaced by the digital signal processing parts 61 and 70 of the novel apparatus. The digital signal processing parts 61, 70, the ADC 52, and the DAC 69 are digital circuits and are adapted to be easily fabricated in the form of an IC. This enables miniaturization of the signal conditioner.

Where an oversampled ADC is used as the ADC 52 shown in Fig. 1 and an oversampled DAC is used as the DAC 69, it is more easy to fabricate these components in the form of an IC. This is next described in greater detail by referring to Fig. 3. An analog-to-digital converter (ADC) is required to be equipped with a prefilter 81 to prevent foldover noise due to sampling. This filter 81 is made up of analog elements such as a capacitor. Therefore, where the ADC is fabricated in the form of an IC, the large size of this analog prefilter 81 poses problems. However, in the oversampled system, signals are sampled at a quite high speed and so the prefilter 81 can be fabricated from a small capacitor or the like. That is, the oversampled converters are adapted to be incorporated in an IC.

(4) In the novel apparatus, both receiving circuit part and transmitting circuit part perform digital arithmetic operations on input signals to obtain desired signals. Hence, the contents of these digital arithmetic operations can be modified by software if the input or output conditions change. Consequently, the novel apparatus can quickly cope with the modifications in the conditions.

(5) In the circuits shown in Figs. 14 and 15, supply of DC power, transmission of the values obtained by measurements, and bidirectional communication can be simultaneously effected simply by interconnecting the control unit 1, or the signal conditioner 50, and the transmitter 6 via only the two transmission lines.

## Claims

1. Signal conditioner (50) connectable to a transmitter (6) via a transmission path (91, 95), said signal conditioner (50) permitting signals, including measurement information and communication information, to be smoothly transmitted between said transmitter (6) and a control unit (1), said signal conditioner comprising

    power supply means (92, 94) which supplies a DC electric power to said transmitter (6) via said transmission path (91, 95), and which can vary said DC voltage according to a high-speed signal containing communication information supplied by said control unit (1) to said transmitter (6);
    input circuit means (51) for receiving an output signal from said transmitter (6) via said transmission path (91, 95) and for converting said output signal into an analog voltage signal exceeding a given level;
    analog to digital conversion means (52) for converting said analog voltage signal from said input circuit means (51) into a digital signal,
    first digital filter means (55) for extracting low-speed signal components from said digital signal from said analog to digital conversion means (52),
    second digital filter means (53) for extracting high speed signal components from said digital signal from said analog to digital conversion means (52),
    first digital processing means (56) for digitally processing the extracted low speed components from said first digital filter means (55) thereby to obtain measurement information; and
    second digital processing means (54) for digitally processing the extracted high speed signal components from said second digital filter means (53) thereby to obtain communication information.

2. Signal conditioner of claim 1, wherein said power supply means (92, 94) comprises:

    a regulator (112) capable of operating either in a constant current mode in which the regulator supplies a constant current to an external terminal connected with said transmission path (91, 95) or in a constant voltage mode in which the regulator supplies a constant voltage to the external terminal; and
    a mode switching means (113) which switches the regulator (112) between the constant voltage mode and the constant current mode, depending on the kind of the transmitter (6) connected with the external terminal.

3. Signal conditioner of claim 1 or 2, further comprising

said transmission path (91, 95) connectable with an actuator (7);

a digital modulating means (72) which receives a first digital signal indicating communication information (M1) transferred from the control unit (1) to the actuator (7) and which produces a second digital signal corresponding to each instantaneous value of the amplitude of a modulated signal indicating the communication information (M1);

an adder (71) producing the sum of a third digital signal and said second digital signal, the third digital signal corresponding to the amount to which the actuator (7) is controlled;

a digital-to-analog conversion means (69) which receives the output from the adder (71) and converts it into an analog signal; and

an output circuit (68) which receives the analog output signal from the digital-to-analog conversion means (69), amplifies the analog signal, and sends the amplified signal to the actuator (7).

**4.** Signal conditioner of claim 1, 2 or 3, wherein said transmission path (91, 95) consists of two transmission lines (101, 102).

**5.** Signal conditioner of claim 3 or 4, wherein said output circuit (68) comprises:

a regulator capable of operating either in a constant current mode in which the regulator supplies a constant current to an external terminal connected with one of said two transmission lines or in a constant voltage mode in which the regulator supplies a constant voltage to the external terminal; and

a mode switching means which switches the regulator between the constant voltage mode and the constant current mode, depending on the kind of the actuator connected with the external terminal.

## Patentansprüche

**1.** Signalaufbereiter bzw. Signalgestalter (50), der über einen ÜbertragungSweg (91, 95) mit einen Sender (6) verbunden werden kann, wobei der Signalaufbereiter (50) erlaubt, daß Signale, einschließlich Meßinformation und Kommunikationsinformation, gleichmäßig zwischen dem Sender (6) und einer Steuereinheit (1) übertragen werden können, mit folgenden Merkmalen:

eine Stromversorgungseinrichtung (92, 94), die eine elektrische Gleichstrom-Energie an den Sender (6) über den Übertragungsweg (91, 95) liefert, und die die Gleichspannung gemäß einen Kommunikationsinformation enthaltenen Hochgeschwindigkeitssignal, das durch die Steuereinheit (1) an den Sender (6) geliefert wird, variieren kann;

eine Eingangsschaltungseinrichtung (51) zum Empfangen eines Ausgangssignals von dem Sender (6) über den Übertragungsweg (91, 95) und zum Umwandeln des Ausgangssignals in ein analoges Spannungssignal, das einen gegebenen Pegel übersteigt;

eine Analog/Digital-Umwandlungseinrichtung (52) zum Umwandeln des analogen Spannungssignals von der Eingangsschaltungseinrichtung (51) in ein digitales Signal;

eine erste Digitalfiltereinrichtung (55) zum Extrahieren von Niedrigeschwindigkeit-Signalkomponenten aus dem digitalen Signal von der Analog/Digital-Umwandlungseinrichtung (52);

eine zweite Digitalfiltereinrichtung (53) zum Extrahieren von Hochgeschwindigkeit-Signalkomponenten aus dem digitalen Signal von der Analog/Digital-Umwandlungseinrichtung (52);

eine erste digitale Verarbeitungseinrichtung (56) zum digitalen Verarbeiten der extrahierten Niedriggeschwindigkeitskomponenten von der ersten Digitalfiltereinrichtung (55), um dadurch Meßinformation zu erhalten; und

eine zweite digitale Verarbeitungseinrichtung (54) zum digitalen Verarbeiten der extrahierten Hochgeschwindigkeits-Signalkomponenten von der zweiten Digitalfiltereinrichtung (53), um dadurch Kommunikationsinformation zu erhalten.

**2.** Signalaufbereiter gemäß Anspruch 1, wobei die Stromversorgungseinrichtung (92, 94) umfaßt:

einen Regler (112), der entweder in einem Konstantstrommodus, in dem der Regler einen konstanten Strom an ein mit dem Übertragungsweg (91, 95) verbundenes externes Terminal liefert, oder in einem Konstantspannungsmodus, in dem der Regler eine konstante Spannung an das externe Terminal liefert; und

eine Modusumschalteinrichtung (113), die den Regler (112) abhängig von der Art des mit dem externen Terminal verbundenen Senders (6) zwischen dem Konstantspannungsmodus und dem Konstantstrommodus umschaltet.

**3.** Signalaufbereiter gemäß Anspruch 1 oder 2, ferner mit folgenden Merkmalen:

der Übertragungsweg (91, 95), der mit einem Aktuator (7) verbunden werden kann;

eine digitale Moduliereinrichtung (72), die ein erstes digitales Signal empfängt, das von der Steuereinheit (1) an den Aktuator (7) übertragene Kommunikationsinformation (M1) angibt, und die ein zweites digitales Signal entsprechend jedem Momentanwert der Amplitude eines die Kommunikationsinformation (M1) angebenden modulierten Signals erzeugt;

einen Addierer (71) zum Bilden der Summe aus einem dritten digitalen Signal und dem zweiten digitalen Signal, wobei das dritte digitale Signal der Größe, auf die der Aktuator (7) gesteuert wird, entspricht,

eine Digital/Analog-Umwandlungseinrichtung (69), die die Ausgabe von dem Addierer (71) empfängt und sie in ein analoges Signal umwandelt; und

eine Ausgangsschaltung (68), die das analoge Ausgangssignal von der Digital/Analog-Umwandlungseinrichtung (69) empfängt, das analoge Signal verstärkt und das verstärkte Signal an den Aktuator (7) sendet.

**4.** Signalaufbereiter gemäß Anspruch 1, 2 oder 3, wobei der Übertragungsweg (91, 95) aus zwei Übertragungsleitungen (101, 102) besteht.

**5.** Signalaufbereiter gemäß Anspruch 3 oder 4, wobei die Ausgangsschaltung (68) umfaßt:

einen Regler, der entweder in einem Konstantstrommodus, in dem der Regler einen konstanten Strom an ein mit einer der beiden Übertragungsleitungen verbundenes externes Terminal liefert, oder in einem Konstantspannungsmodus, in dem der Regler eine konstante Spannung an das externe Terminal liefert, zu arbeiten vermag, und

eine Modusumschalteinrichtung, die den Regler abhängig von der Art des mit dem externen Terminal verbundenen Aktuators zwischen dem Konstantspannungsmodus und dem Konstantstrommodus umschaltet.

## Revendications

**1.** Conditionneur de signaux (50) qui peut être connecté à un émetteur (6) via un trajet de transmission (91, 95), ledit conditionneur de signaux (50) permettant la transmission, de manière régulière, de signaux comprenant des informations de mesure et des informations de communication entre ledit émetteur (6) et une unité de contrôle (1), ledit conditionneur de signaux comprenant :

des moyens d'alimentation (92, 94) qui fournissent une puissance électrique continue audit émetteur (6) via ledit trajet de transmission (91, 95), et qui peuvent faire varier ladite tension continue conformément à un signal à grande vitesse contenant les informations de communication fournies par ladite unité de contrôle (1) audit émetteur (6) ;

des moyens formant circuit d'entrée (51) pour recevoir un signal de sortie provenant dudit émetteur (6) via ledit trajet de transmission (91, 95) et pour convertir ledit signal de sortie en un signal de tension analogique dépassant un niveau donné ;

des moyens de conversion analogique-numérique (52) pour convertir ledit signal de tension analogique provenant desdits moyens formant circuit d'entrée (51) en un signal numérique ;

des premiers moyens de filtrage numérique (55) pour extraire les composantes de signal à faible vitesse dudit signal numérique provenant desdits moyens de conversion analogique-numérique (52) ;

des seconds moyens de filtrage numérique (53) pour extraire les composantes de signal à grande vitesse dudit signal numérique provenant desdits moyens de conversion analogique-numérique (52) ;

des premiers moyens de traitement numérique (56) pour traiter numériquement les composantes à faible vitesse extraites provenant desdits premiers moyens de filtrage numérique (55) pour obtenir, de ce fait, des informations de mesure ; et

des seconds moyens de traitement numérique (54) pour traiter numériquement les composantes du signal à grande vitesse extraites provenant desdits seconds moyens de filtrage numérique (53) pour obtenir, de ce fait, des informations de communication.

**2.** Conditionneur de signaux selon la revendication 1, dans lequel lesdits moyens d'alimentation (92, 94) comprennent :

un régulateur (112) capable de fonctionner soit dans un mode de courant constant dans lequel le régulateur fournit un courant constant à une borne extérieure connectée audit trajet de transmission (91, 95), soit dans un mode de tension constante dans lequel le régulateur fournit une tension constante à la borne extérieure ; et

des moyens de commutation de mode (113) qui commutent le régulateur (112) entre le mode de tension constante et le mode de courant constant, en fonction du type d'émetteur (6) connecté à la borne extérieure.

**3.** Conditionneur de signaux selon la revendication 1 ou 2, comprenant, de plus :

ledit trajet de transmission (91, 95) qui peut être connecté à un actionneur (7) ;

des moyens de modulation numérique (72) qui reçoivent un premier signal numérique indiquant les informations de communication (M1) transférées à partir de l'unité de contrôle (1) à l'actionneur (7) et qui produisent un second signal numérique correspondant à chaque valeur instantanée de l'amplitude d'un signal modulé indiquant les informations de communication (M1) ;

un additionneur (71) produisant la sonne d'un troisième signal numérique et dudit second signal numérique, le troisième signal numérique correspondant à la quantité de commande de l'actionneur (7) ;

des moyens de conversion numérique-analogique (69) qui reçoivent la sortie de l'additionneur (71) et la convertissent en un signal analogique ; et

un circuit de sortie (68) qui reçoit le signal de sortie analogique provenant des moyens de conversion numérique-analogique (69), amplifie le signal analogique, et envoie le signal amplifié à l'actionneur (7).

**4.** Conditionneur de signaux selon la revendication 1, 2 ou 3, dans lequel ledit trajet de transmission (91, 95) consiste en deux lignes de transmission (101, 102).

**5.** Conditionneur de signaux selon la revendication 3 ou 4, dans lequel ledit circuit de sortie (68) comprend :

un régulateur capable de fonctionner soit dans un mode de courant constant dans lequel le régulateur fournit un courant constant à une borne extérieure connectée à l'une desdites deux lignes de transmission, soit dans un mode de tension constante dans lequel le régulateur fournit une tension constante à la borne extérieure ; et

des moyens de commutation de mode qui commutent le régulateur entre le mode de tension constante et le mode de courant constant, en fonction du type de l'actionneur connecté à la borne extérieure.

Fig.1

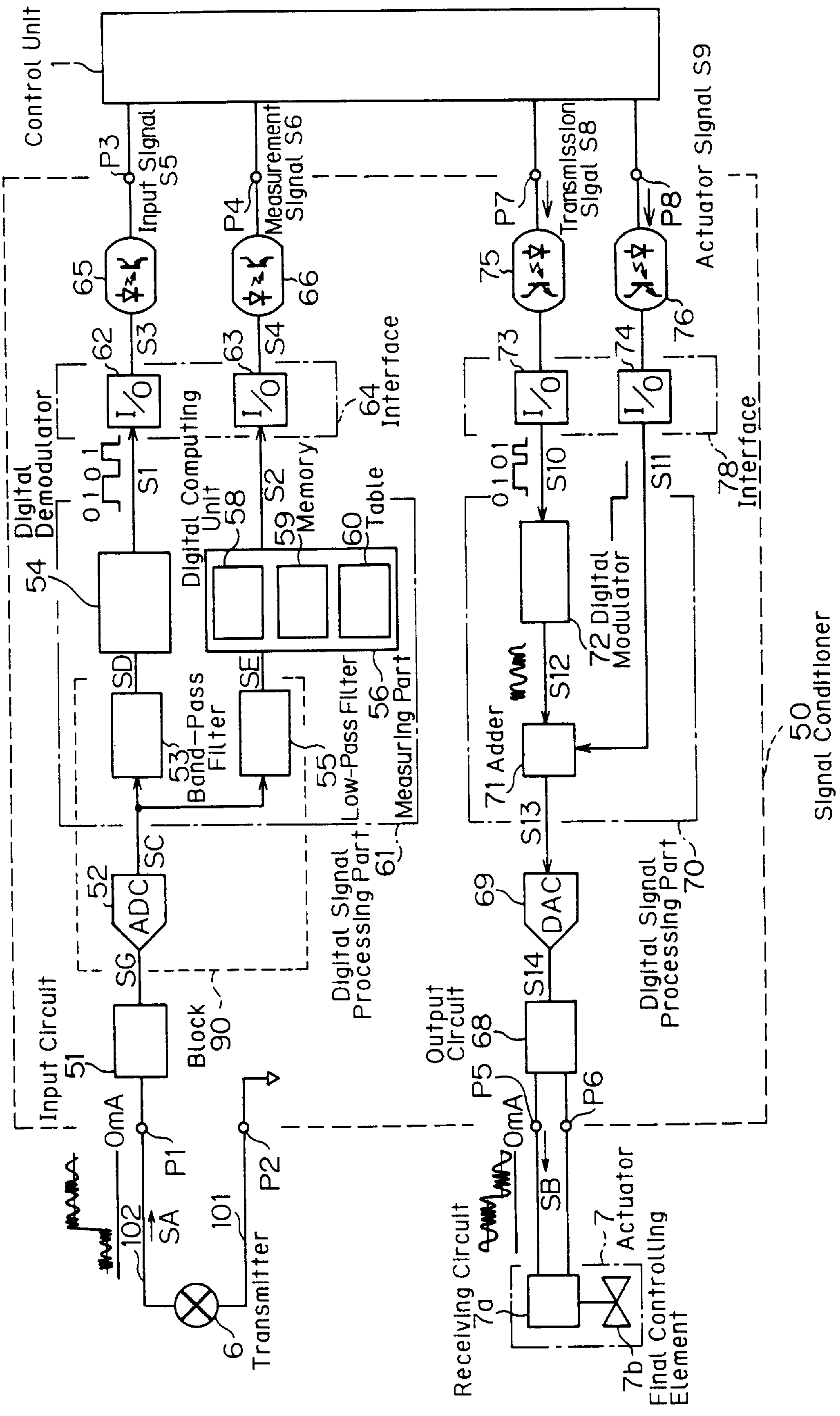
Control Unit
1
P3
Input Signal S5
P4
Measurement Signal S6
P7
Transmission Sigal S8
P8
Actuator Signal S9
65
66
75
76
62
63
S3
S4
73
74
64 Interface
78 Interface
Digital Demodulator
0101
S1
Digital Computing Unit
58
59 Memory
60 Table
S2
0101
S10
S11
54
72 Digital Modulator
SD
SE
S12
Band-Pass Filter
53
Low-Pass Filter
55
56
Measuring Part
71 Adder
S13
50 Signal Conditioner
52
ADC
SC
69
DAC
Digital Signal Processing Part
61
Digital Signal Processing Part
70
Input Circuit
51
SG
Block 90
Output Circuit
68
S14
OmA
P1
SA
102
101
P2
6
Transmitter
P5
P6
OmA
SB
7
Actuator
Receiving Circuit
7a
7b
Final Controlling Element

Fig.2

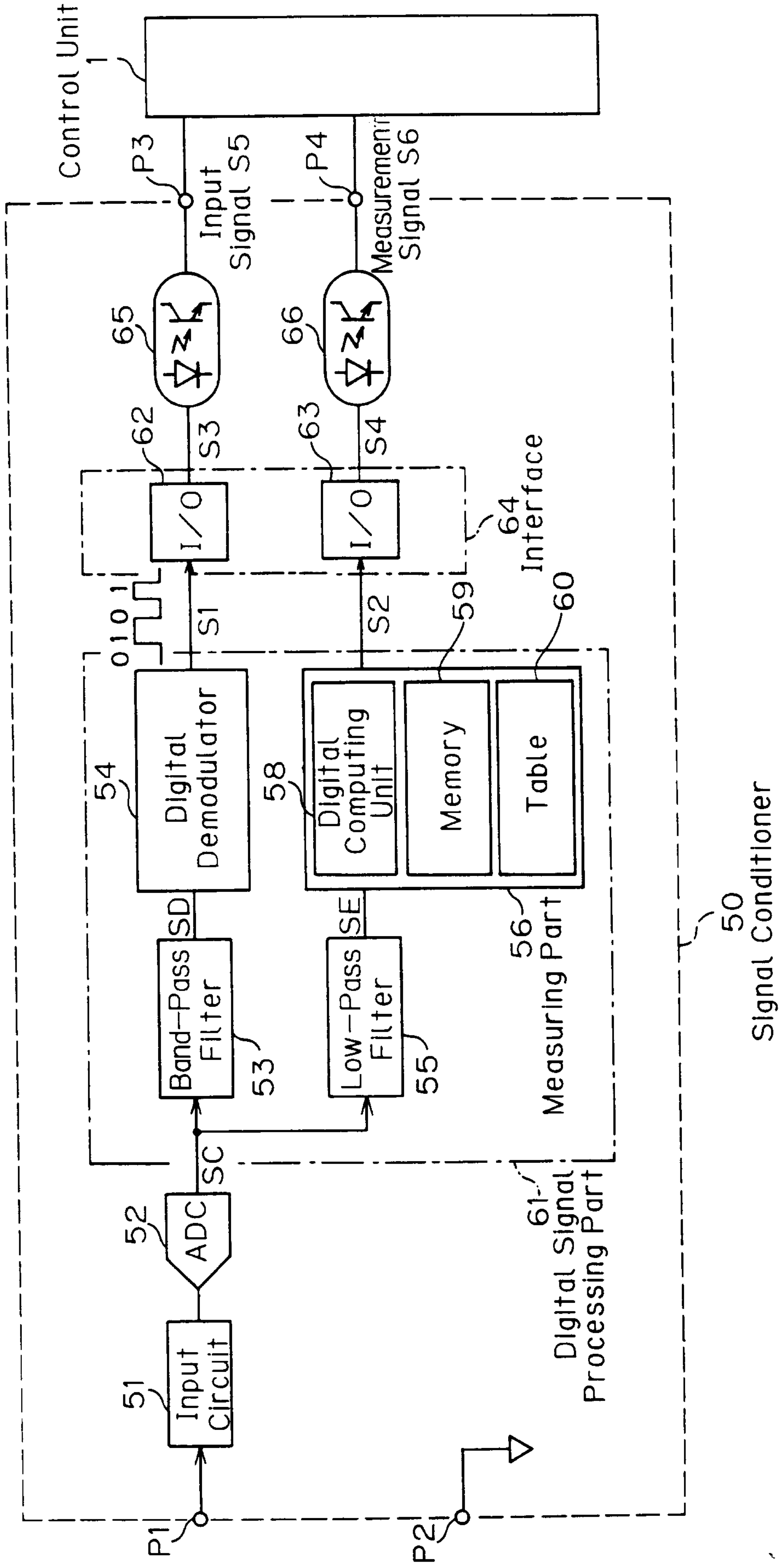
Control Unit
1
P3
Input Signal S5
P4
Measurement Signal S6
65
66
62
63
S3
S4
I/O
I/O
64 Interface
0 1 0 1
S1
S2
59
60
54
Digital Demodulator
58
Digital Computing Unit
Memory
Table
SD
SE
Band-Pass Filter
Low-Pass Filter
53
55
56 Measuring Part
50 Signal Conditioner
SC
ADC
52
61 Digital Signal Processing Part
Input Circuit
51
P1
P2

Fig.3

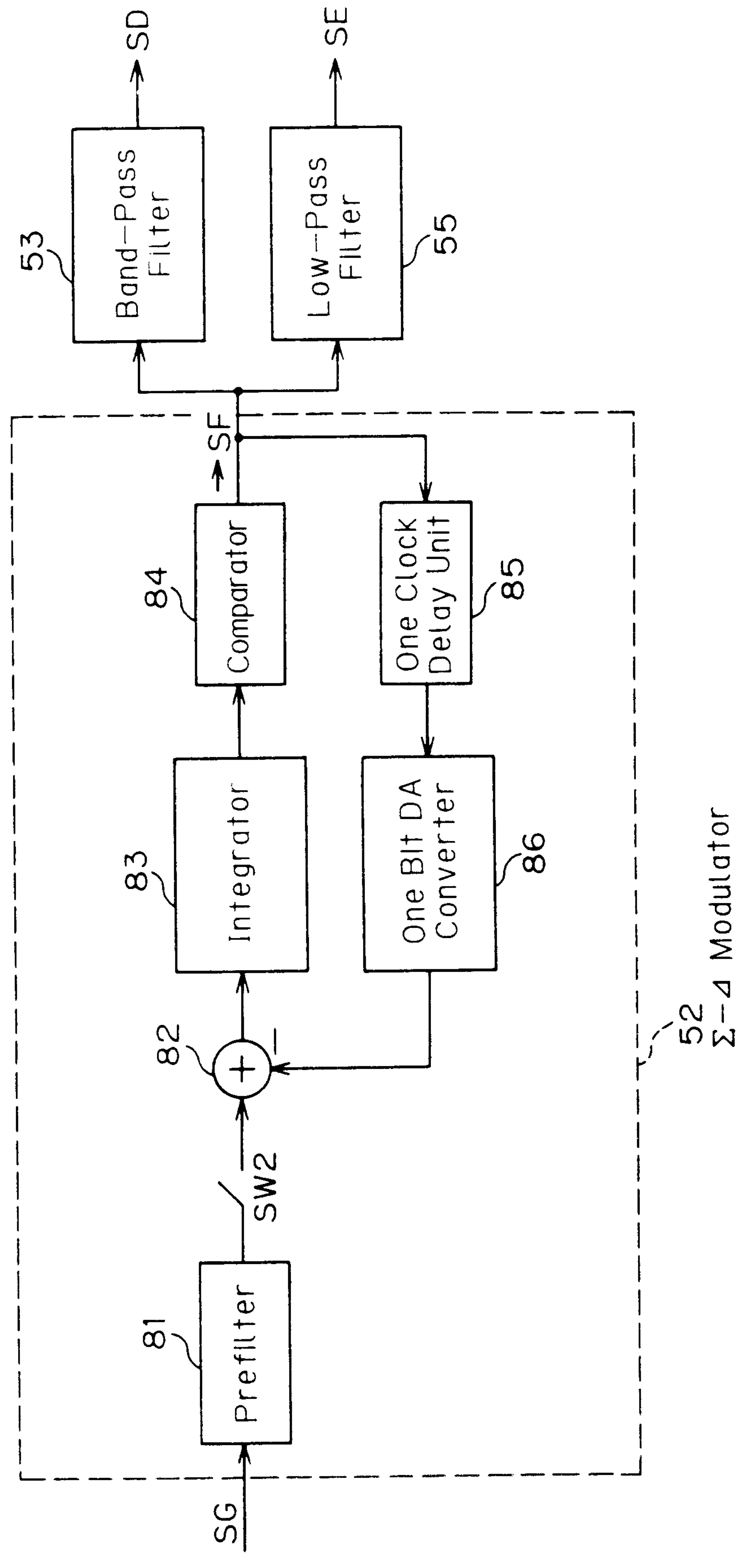
SD
SE
53
Band-Pass Filter
Low-Pass Filter
55
SF
84
Comparator
One Clock Delay Unit
85
83
Integrator
One Bit DA Converter
86
82
+
−
SW2
81
Prefilter
SG
52
Σ-Δ Modulator

Fig.4 (a)

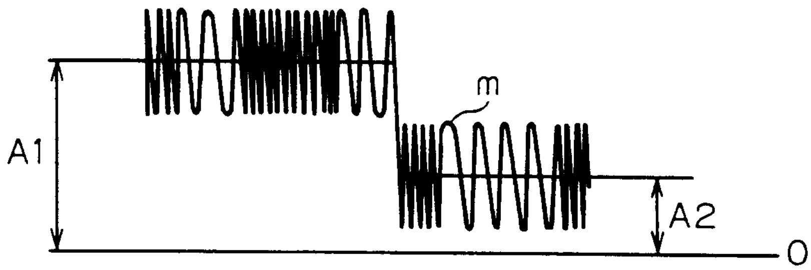


Fig.4 (b)

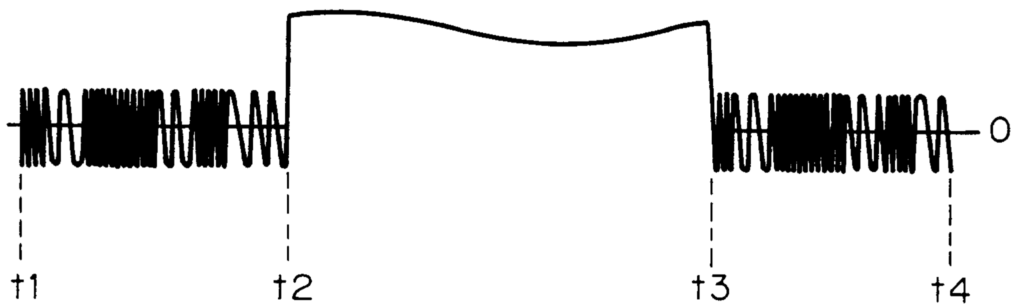


Fig.5 (a)

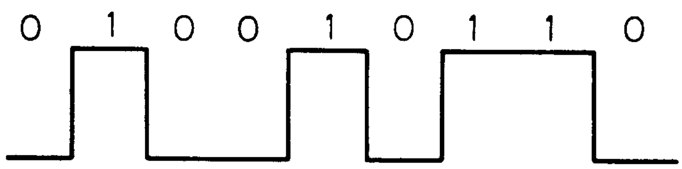


Fig.5 (b)

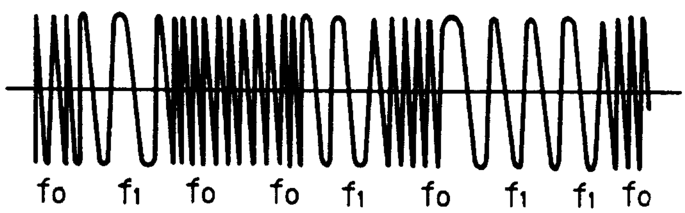

Fig.6

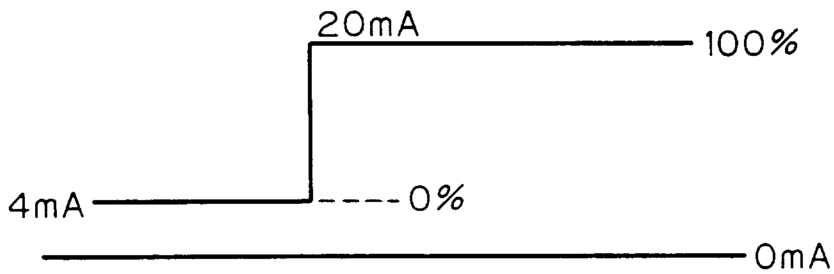
20mA
100%
4mA
0%
0mA

Fig.7

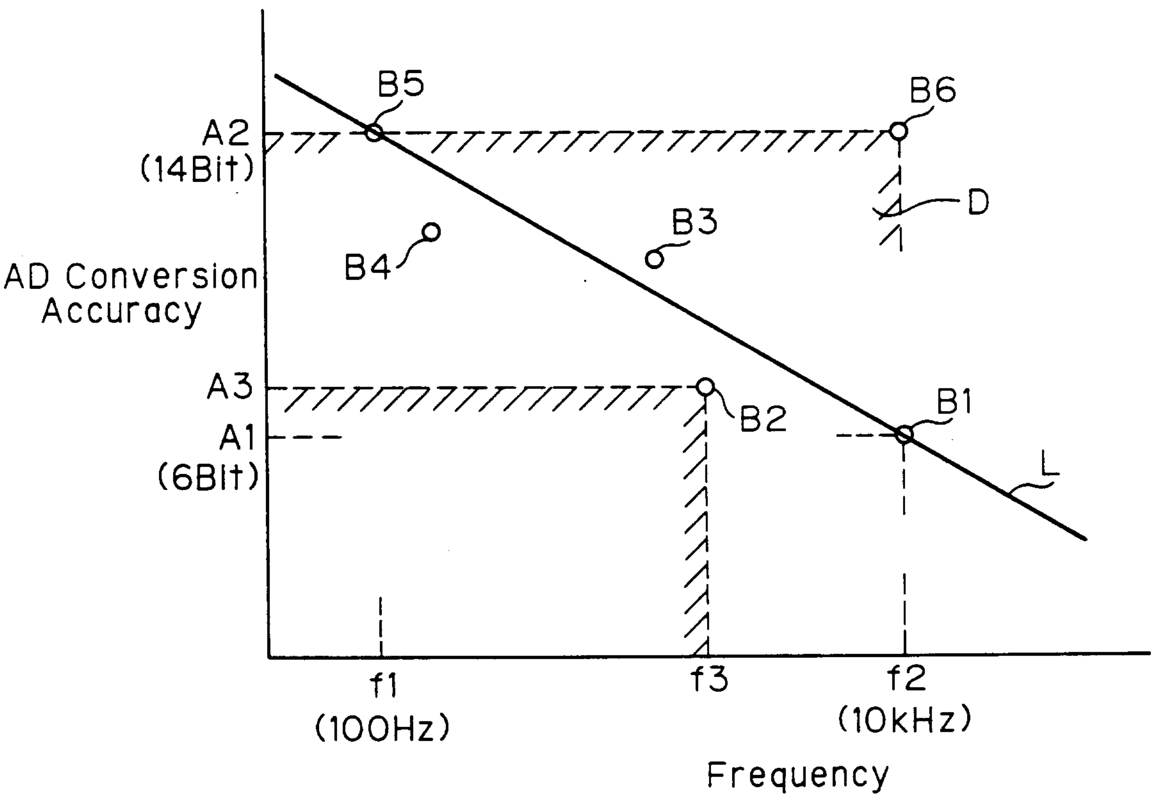
B5
B6
A2
(14Bit)
D
B3
B4
AD Conversion
Accuracy
A3
B2
B1
A1
(6Bit)
L
f1
(100Hz)
f3
f2
(10kHz)
Frequency

Fig.8

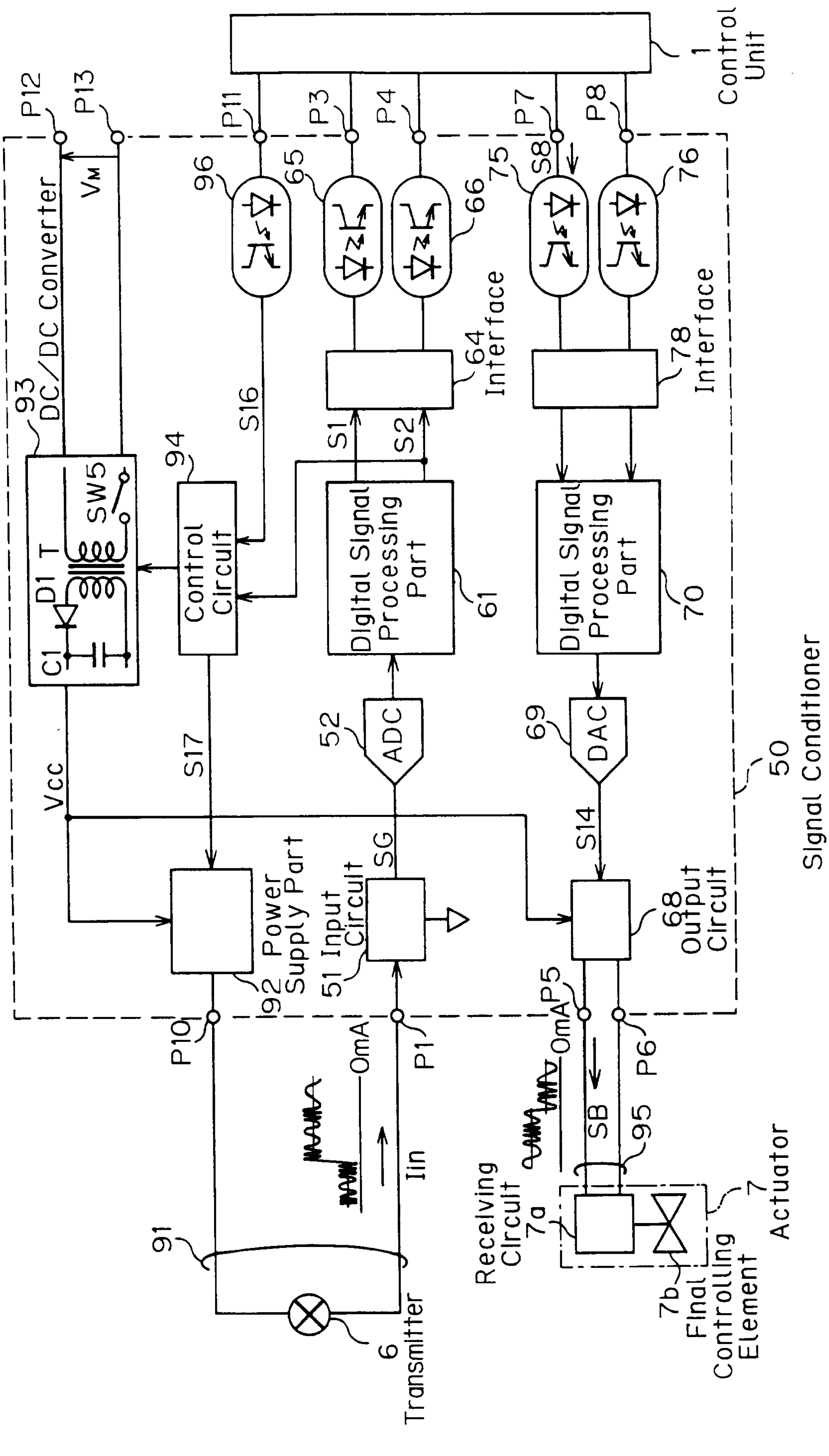

P12
P13
93
DC/DC Converter
$V_M$
C1
D1
T
SW5
94
Control Circuit
S16
S17
Vcc
92
Power Supply Part
P10
91
6
Transmitter
OmA
Iin
P1
51 Input Circuit
SG
52
ADC
Digital Signal Processing Part
61
S1
S2
64
Interface
P11
96
P3
65
P4
66
1
Control Unit
P7
S8
75
P8
76
78
Interface
Digital Signal Processing Part
70
69
DAC
S14
68
Output Circuit
50
Signal Conditioner
P5
P6
OmA
SB
95
Receiving Circuit
7a
7b
Final Controlling Element
7
Actuator

Fig.9

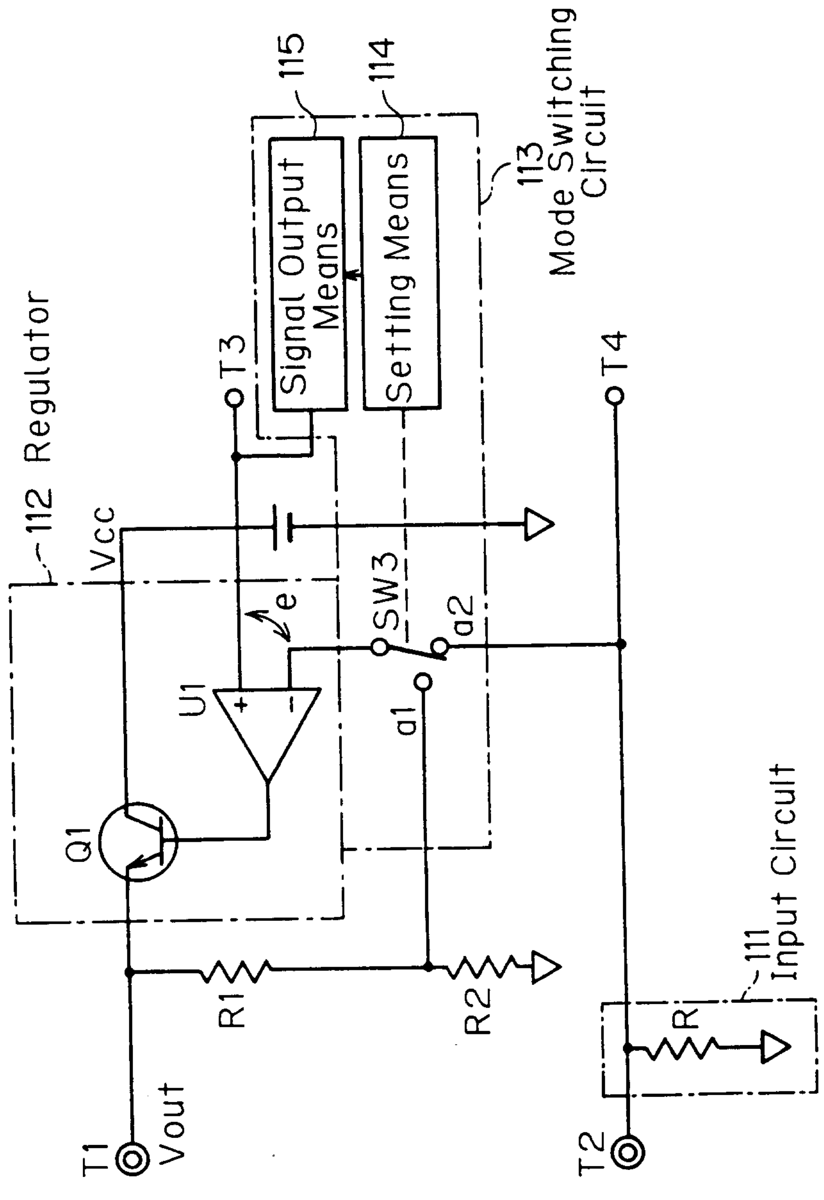
112 Regulator
Vcc
Q1
U1
e
SW3
a1
a2
T1
Vout
R1
R2
T2
T3
T4
R
111 Input Circuit
Signal Output Means
115
Setting Means
114
113 Mode Switching Circuit

Fig.10

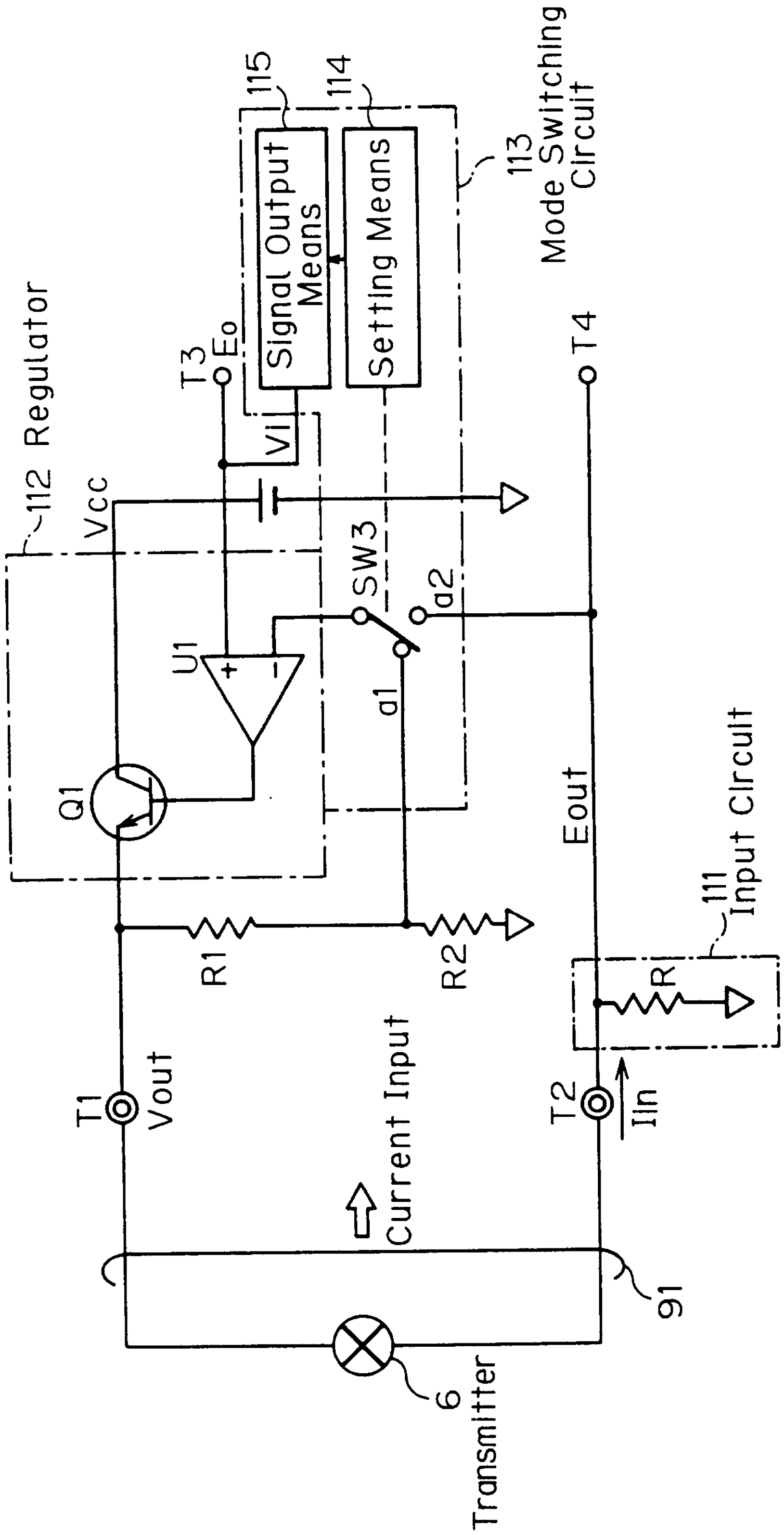
112 Regulator
Vcc
Q1
U1
T3
Eo
Vi
115
Signal Output Means
114
Setting Means
113
Mode Switching Circuit
T4
SW3
a1
a2
Eout
111
Input Circuit
R
R1
R2
T1
Vout
T2
Iin
Current Input
91
6
Transmitter

Fig.11

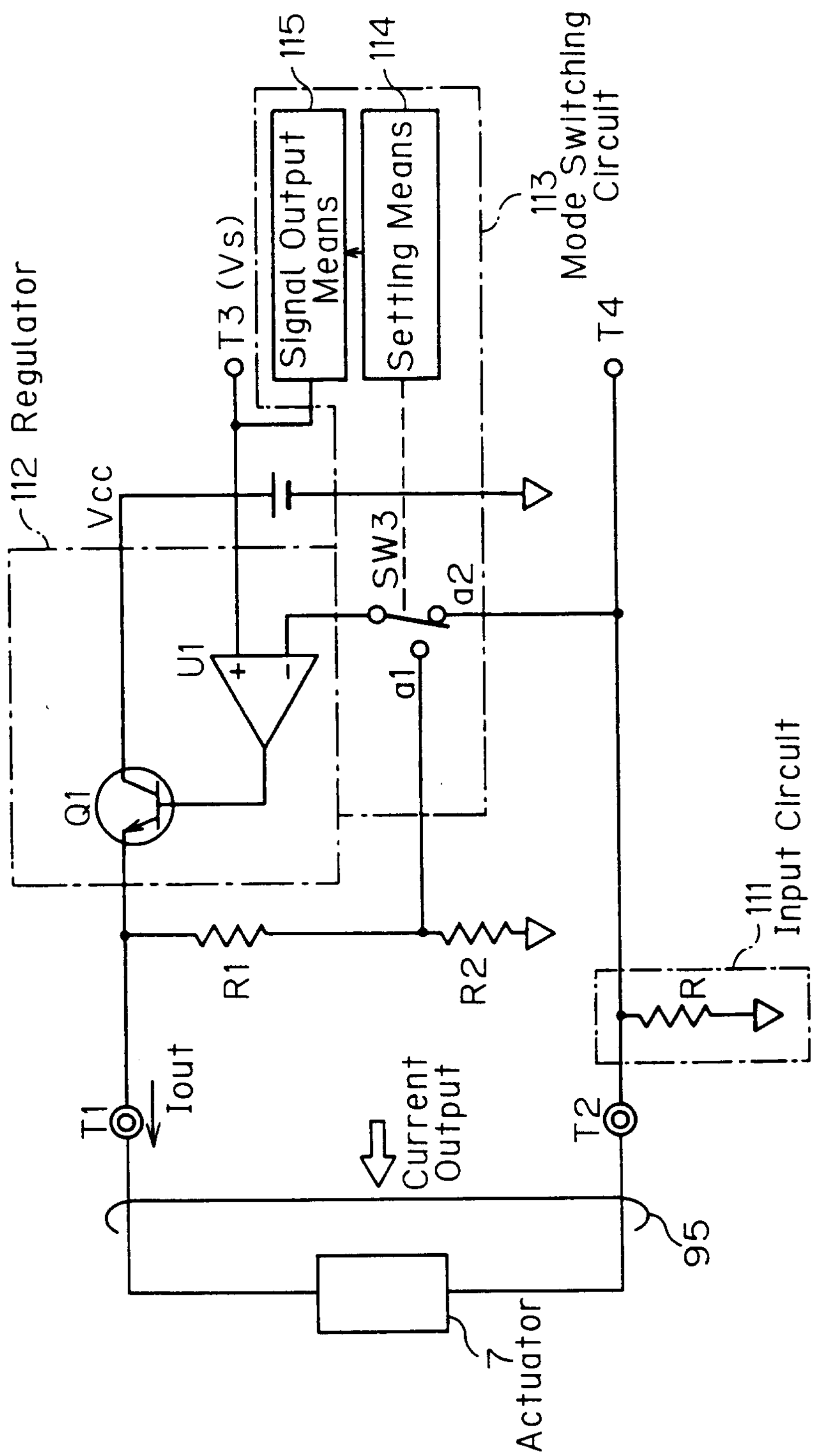

112 Regulator
Vcc
Q1
U1
SW3
a1
a2
T3 (Vs)
T4
Signal Output Means
Setting Means
115
114
113 Mode Switching Circuit
R1
R2
T1
Iout
T2
Current Output
111 Input Circuit
R
95
7 Actuator

Fig.12

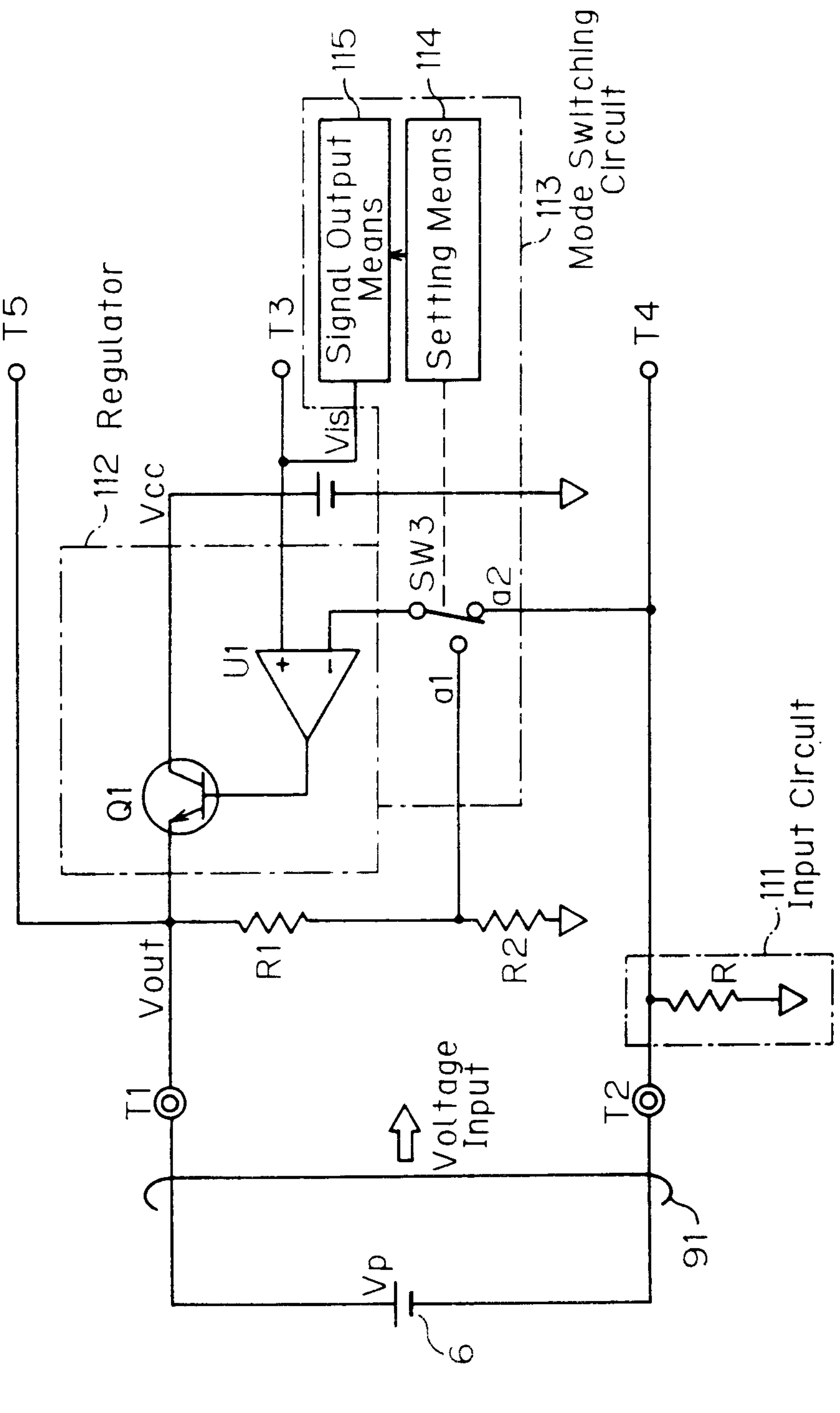

T5
112 Regulator
Vcc
T3
Vis
Signal Output Means
115
Setting Means
114
113 Mode Switching Circuit
T4
SW3
a2
a1
U1
Q1
Vout
R1
R2
T1
T2
Voltage Input
R
111 Input Circuit
Vp
6
91

Fig.13

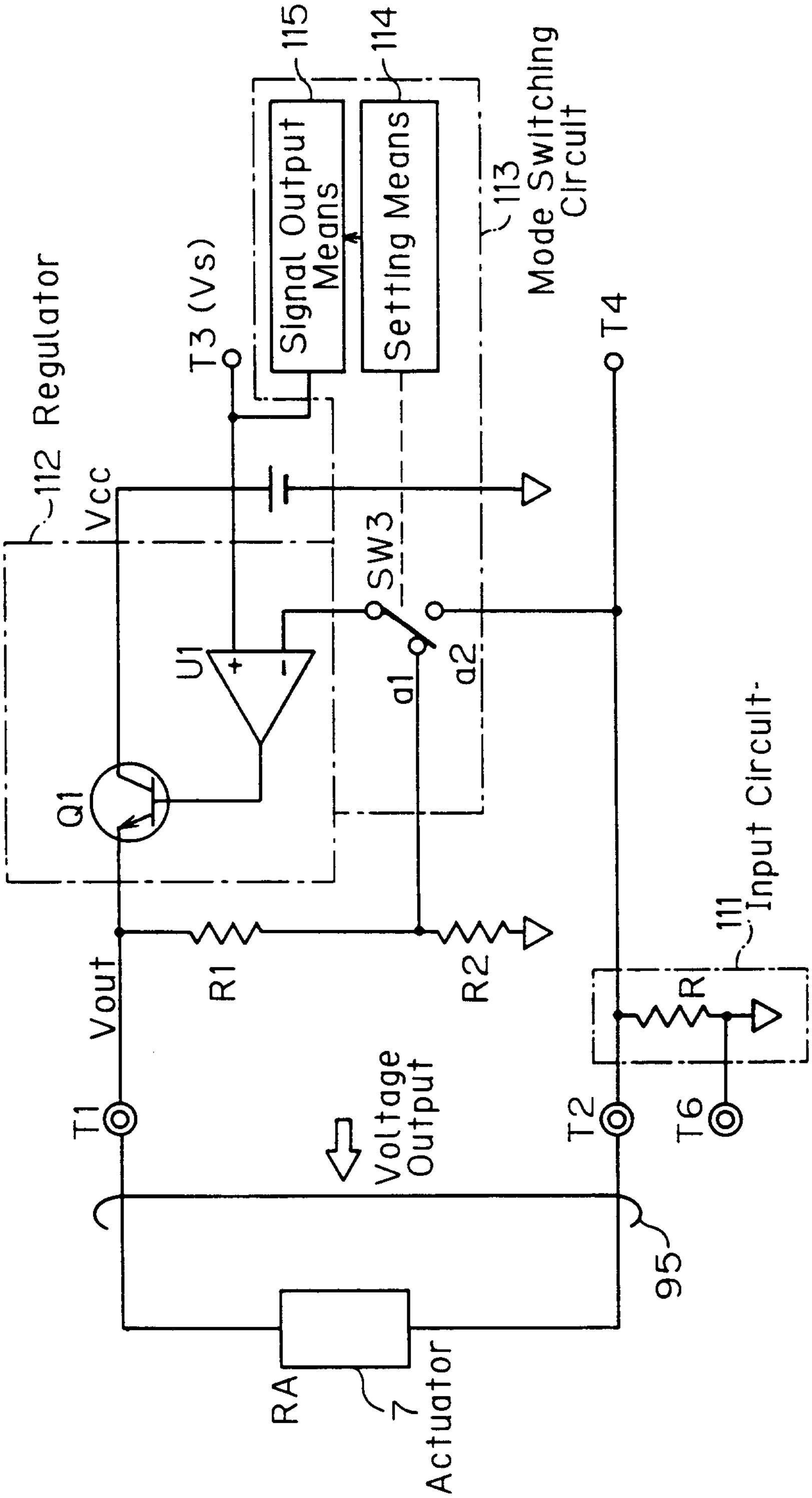
112 Regulator
Vcc
T3 (Vs)
Signal Output Means
115
Setting Means
114
113 Mode Switching Circuit
T4
SW3
U1
a1
a2
Q1
Vout
R1
R2
T1
T2
T6
Voltage Output
R
111 Input Circuit
95
RA
7 Actuator

Fig.14

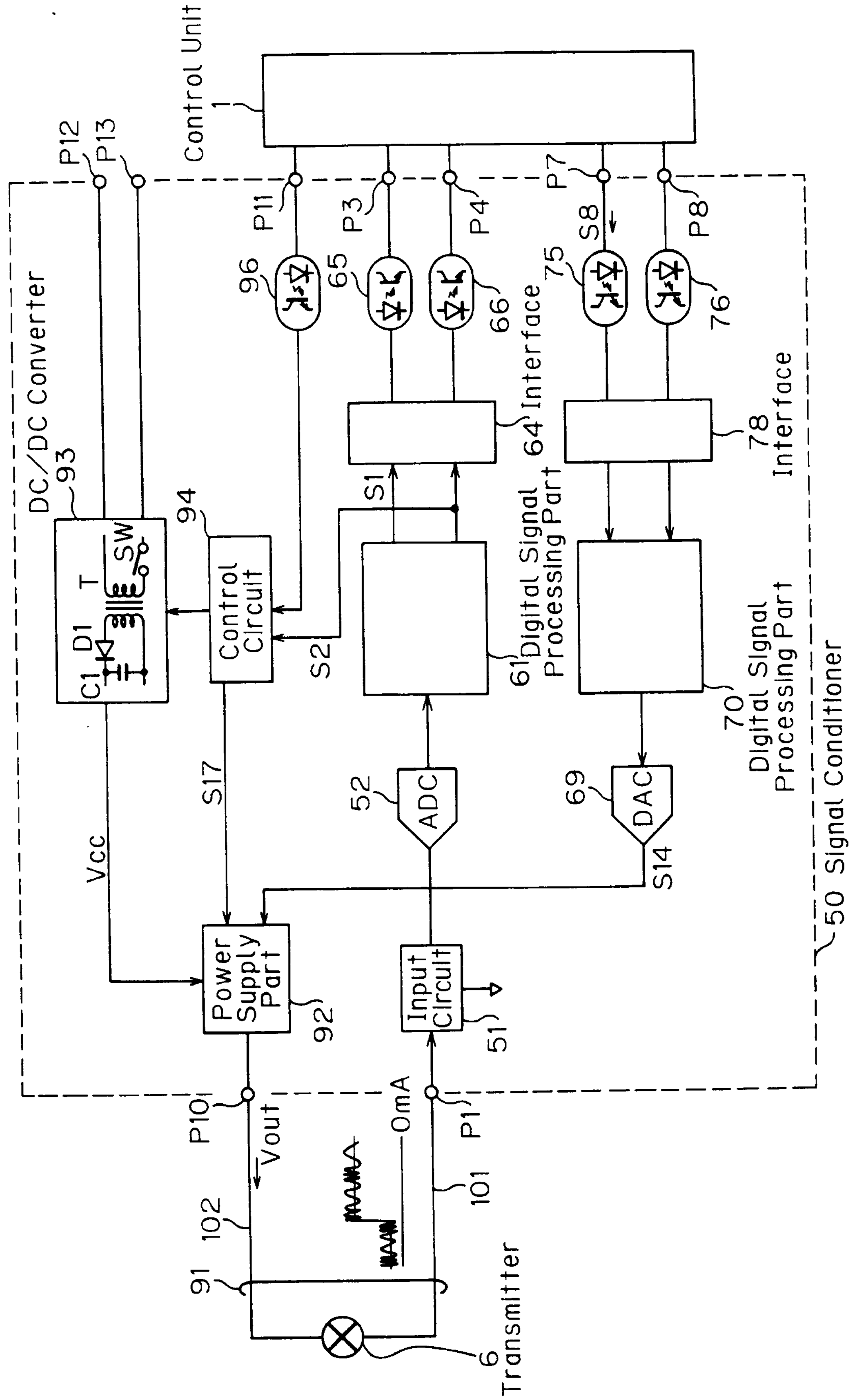
Control Unit
1
P12
P13
P11
P3
P4
P7
S8
P8
96
65
66
75
76
DC/DC Converter
93
C1
D1
T
SW
94
Control Circuit
S1
S2
64 Interface
61 Digital Signal Processing Part
78 Interface
70 Digital Signal Processing Part
Vcc
S17
52
ADC
69
DAC
S14
Power Supply Part
92
Input Circuit
51
50 Signal Conditioner
P10
Vout
0mA
P1
102
101
91
6 Transmitter

Fig.15

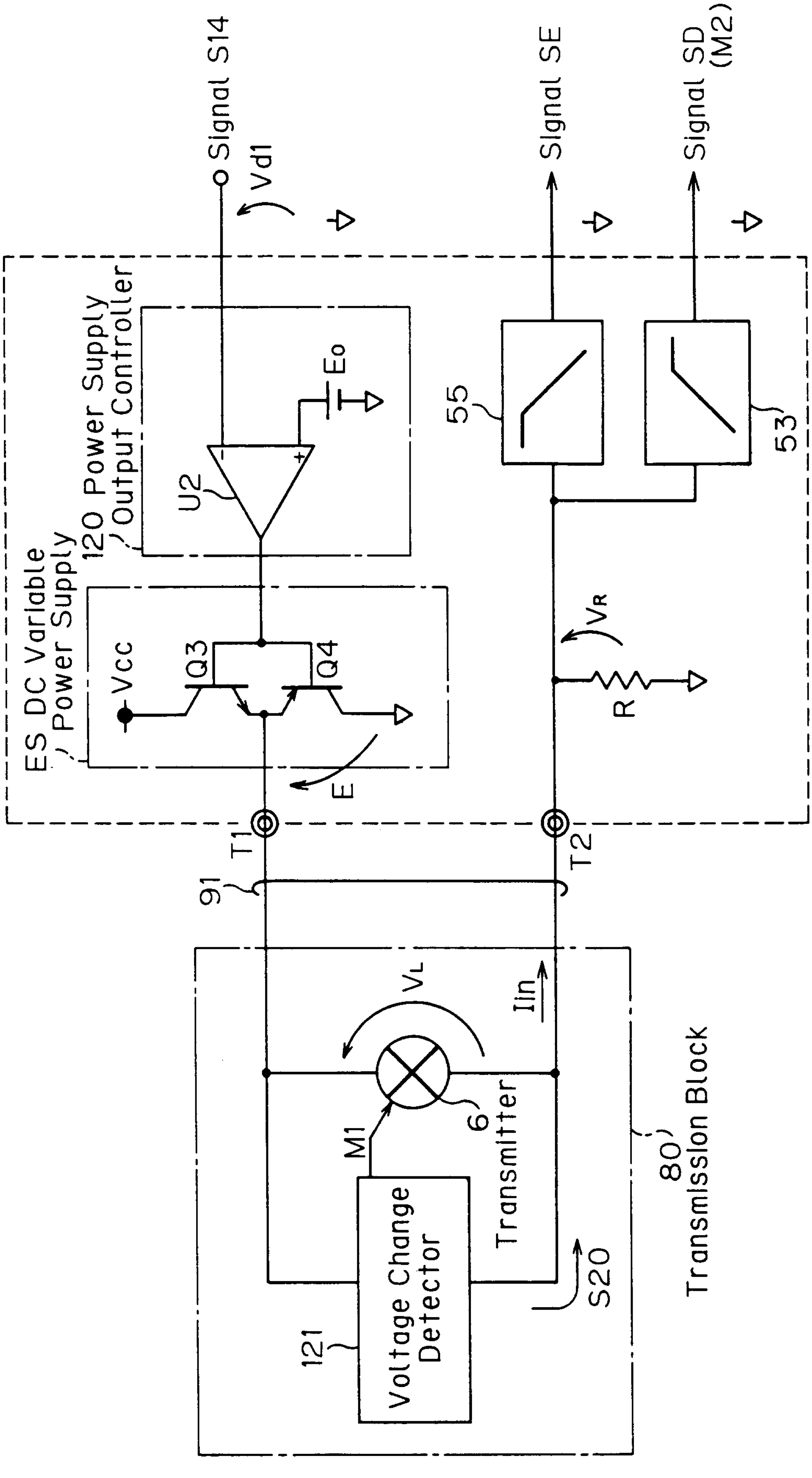
Signal S14
Vd1
Signal SE
Signal SD (M2)
120 Power Supply Output Controller
Eo
U2
55
53
ES DC Variable Power Supply
Vcc
Q3
Q4
E
VR
R
T1
T2
91
VL
Iin
6
M1
Transmitter
121
Voltage Change Detector
S20
80
Transmission Block

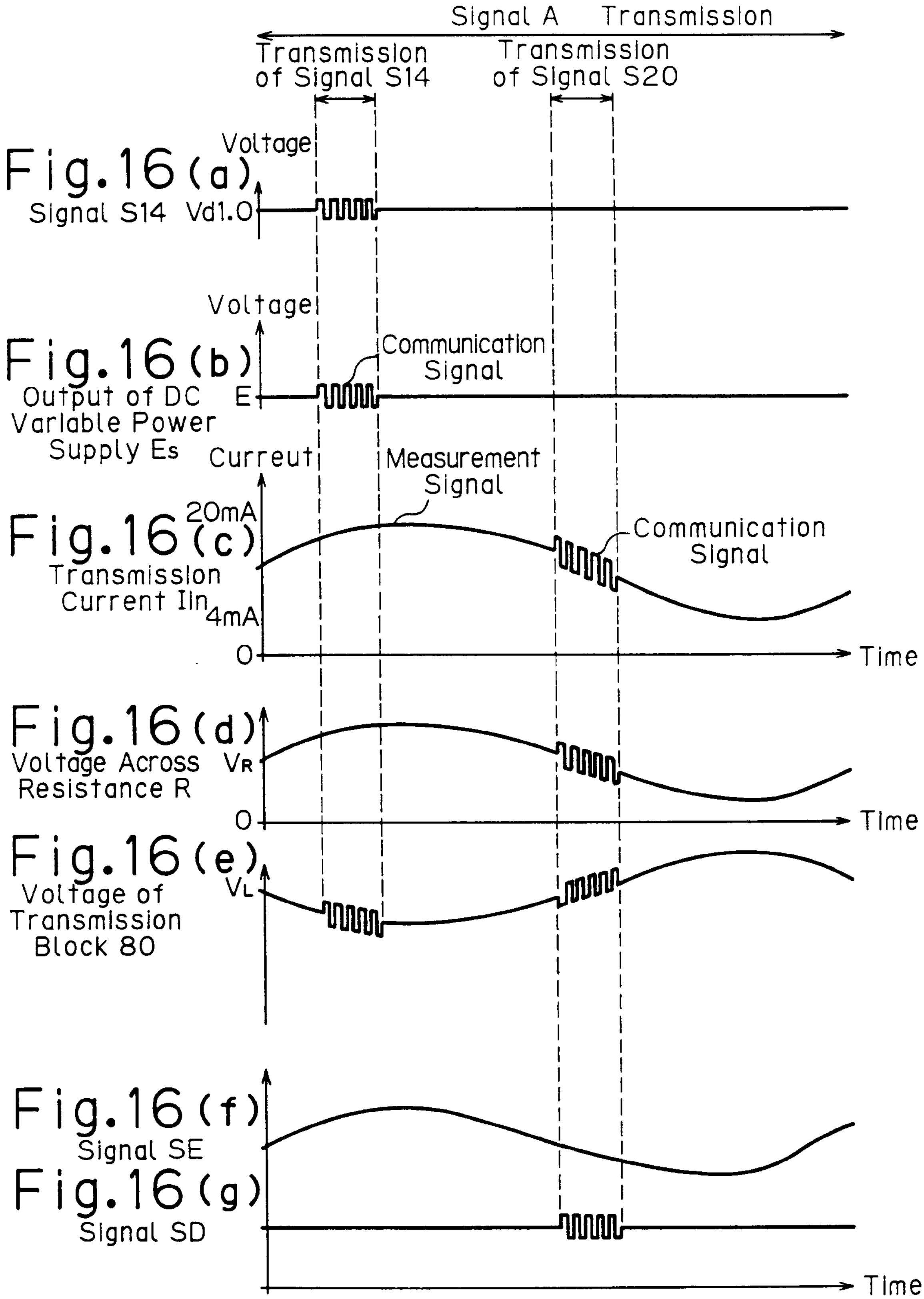
Signal A Transmission
Transmission of Signal S14
Transmission of Signal S20
Fig.16(a)
Voltage
Signal S14
Vd1.0
Fig.16(b)
Voltage
Communication Signal
Output of DC Variable Power Supply Es
E
Fig.16(c)
Curreut
Measurement Signal
Communication Signal
20mA
Transmission Current Iin
4mA
0
Time
Fig.16(d)
Voltage Across Resistance R
VR
0
Time
Fig.16(e)
Voltage of Transmission Block 80
VL
Fig.16(f)
Signal SE
Fig.16(g)
Signal SD
Time

Fig.17

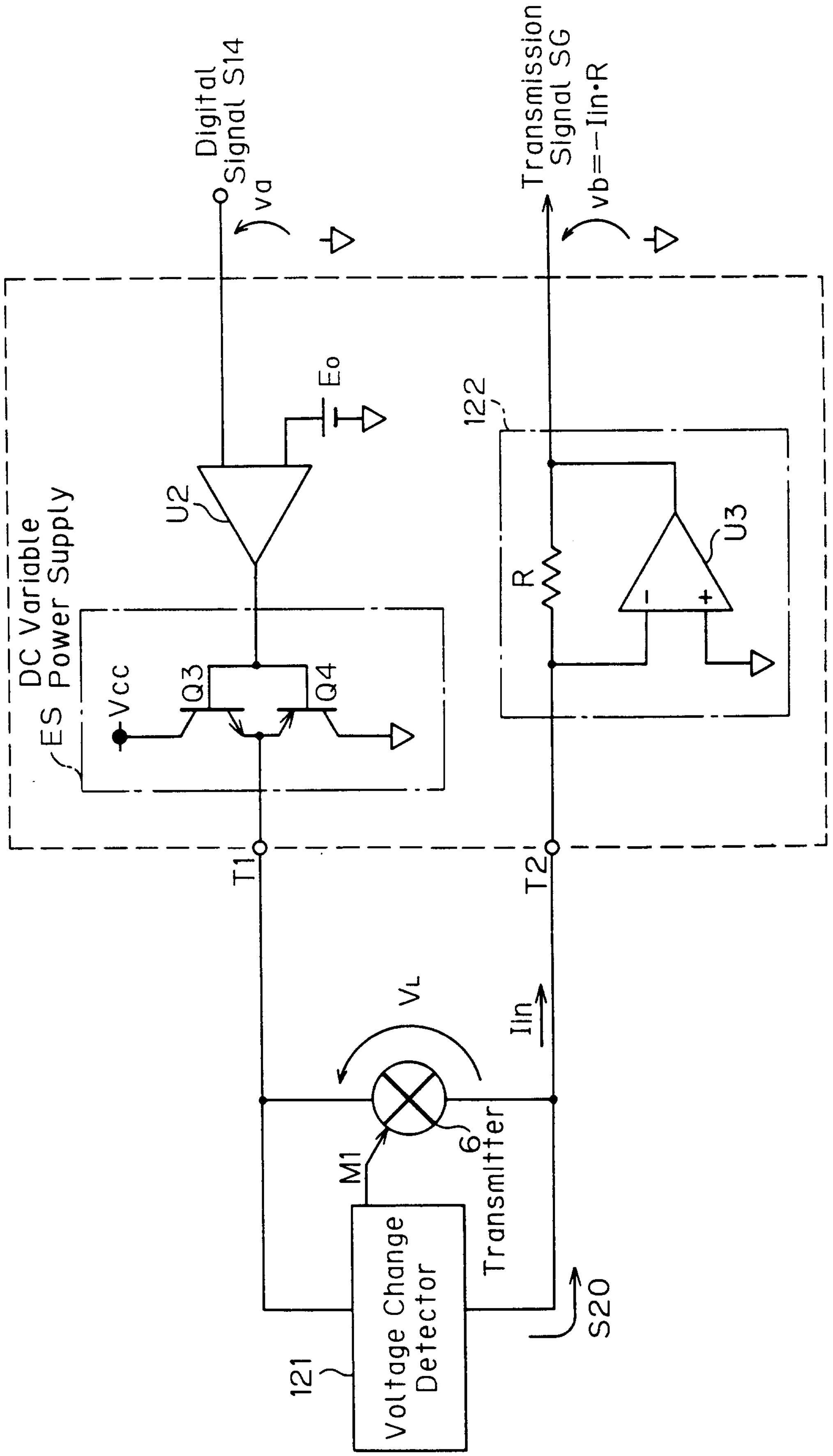
Digital Signal S14
va
Transmission Signal SG
vb=−Iin·R
Eo
122
DC Variable Power Supply
ES
Vcc
Q3
Q4
U2
U3
R
T1
T2
VL
Iin
M1
6
Transmitter
121
Voltage Change Detector
S20

Fig.18

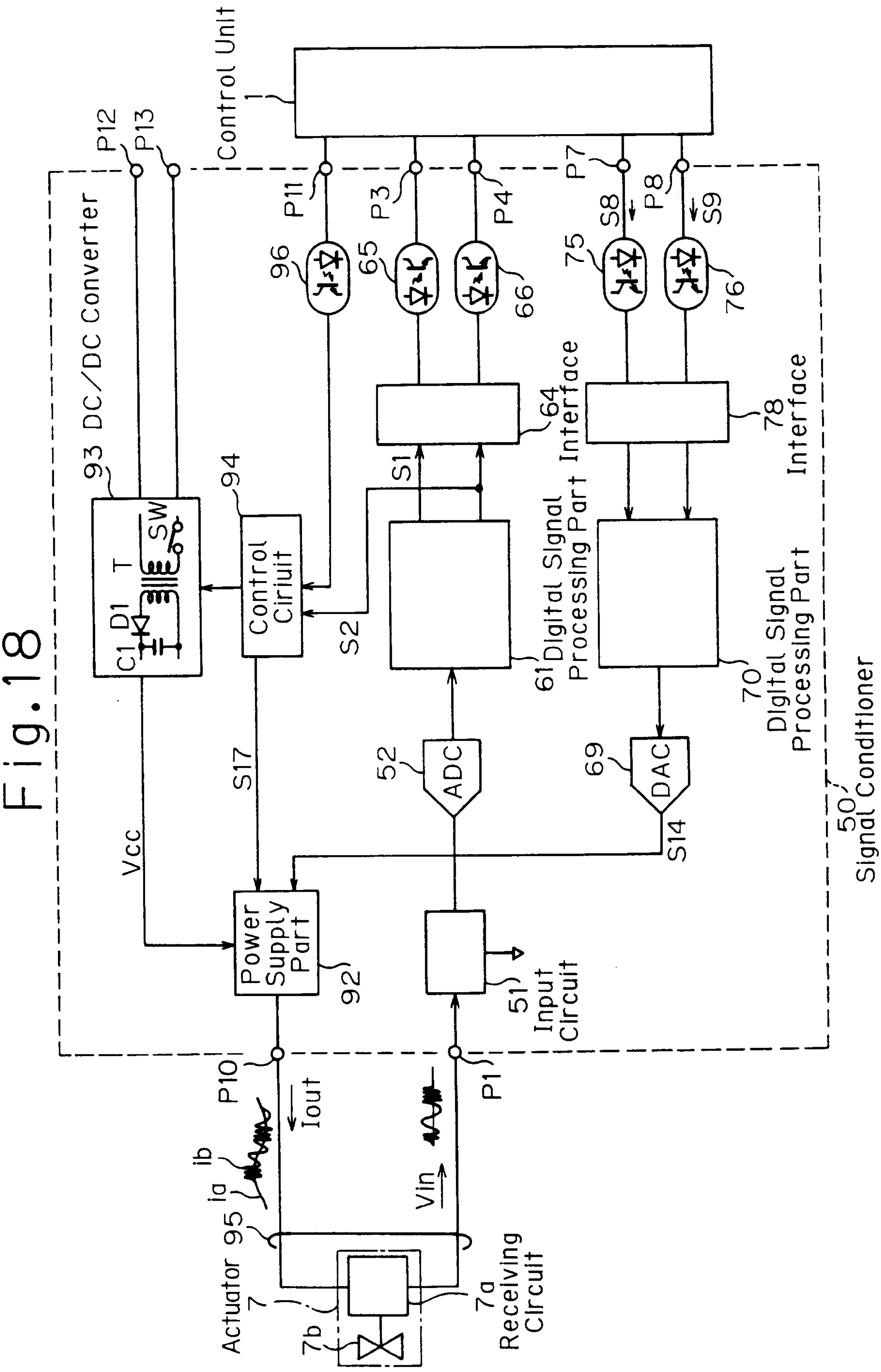
Control Unit
1
P12
P13
P11
P3
P4
P7
P8
S8
S9
96
65
66
75
76
93 DC/DC Converter
C1
D1
T
SW
94
Control Ciriuit
S2
S1
64
Interface
78
Interface
61
Digital Signal Processing Part
70
Digital Signal Processing Part
52
ADC
69
DAC
S17
S14
Vcc
Power Supply Part
92
51
Input Circuit
50
Signal Conditioner
P10
P1
Iout
Vin
Ia
Ib
95
Actuator
7
7a
7b
Receiving Circuit

Fig.19(a)

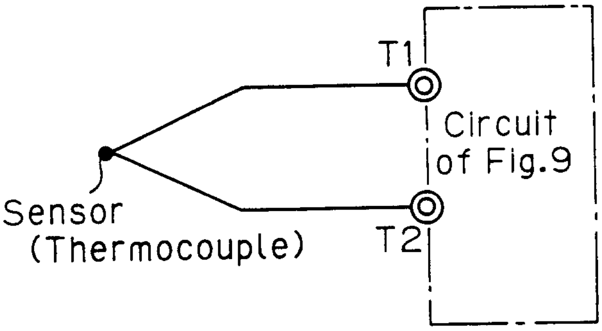


Fig.19 (b)

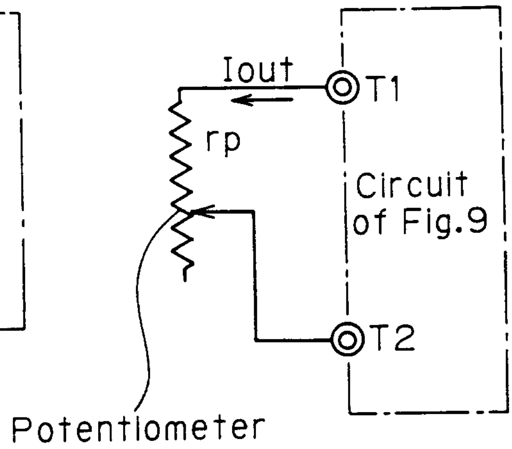


Fig.20(a)
Full Power

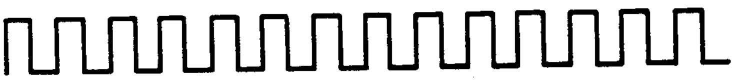

Fig.20(b)
Half Power

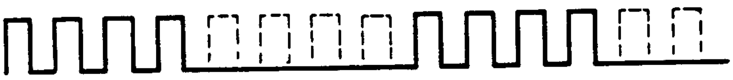

Fig.20(c)
3/8 Power

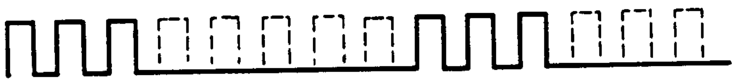

Fig.20(d)
Stop

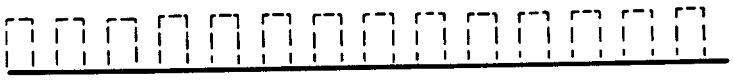

Fig.21

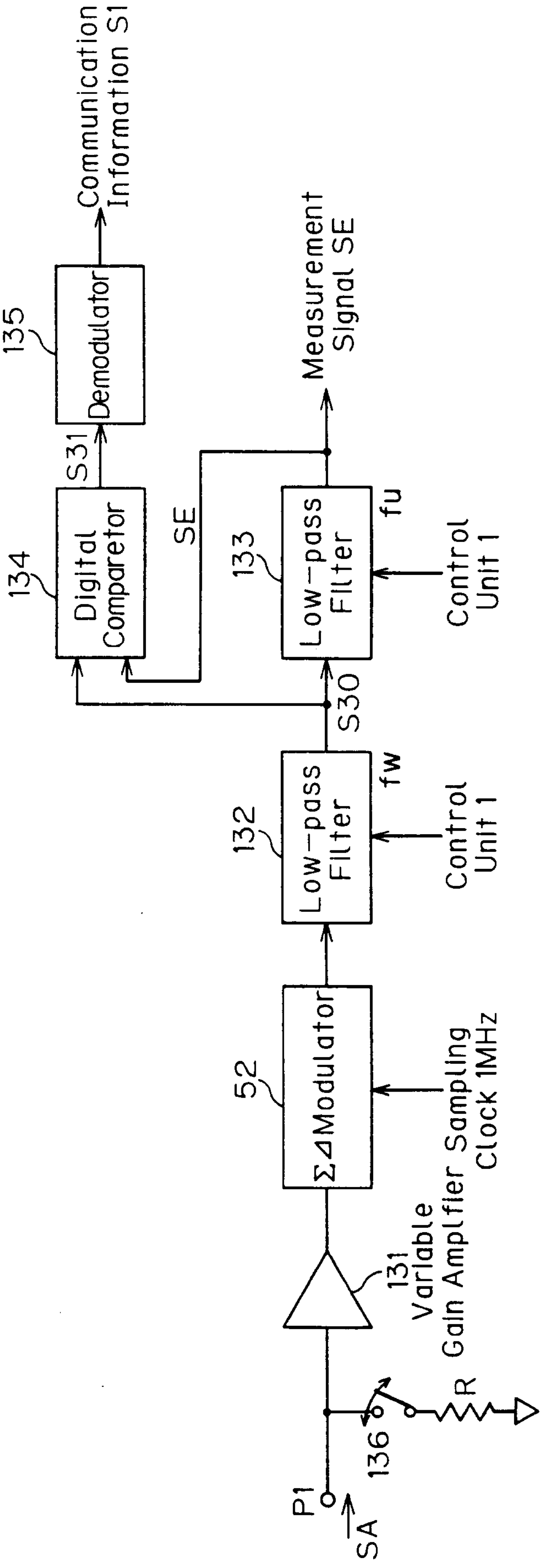
Communication Information S1
135
Demodulator
S31
134
Digital Comparetor
SE
Measurement Signal SE
133
Low-pass Filter
fu
Control Unit 1
S30
132
Low-pass Filter
fw
Control Unit 1
52
ΣΔModulator
Sampling Clock 1MHz
131
Variable Gain Amplfier
R
136
P1
SA

Fig.22(a)
Signal SA

Fig.22(b)
Signal S30

Fig.22(c)
Signal SE

Fig.22(d)
Communication Information S1

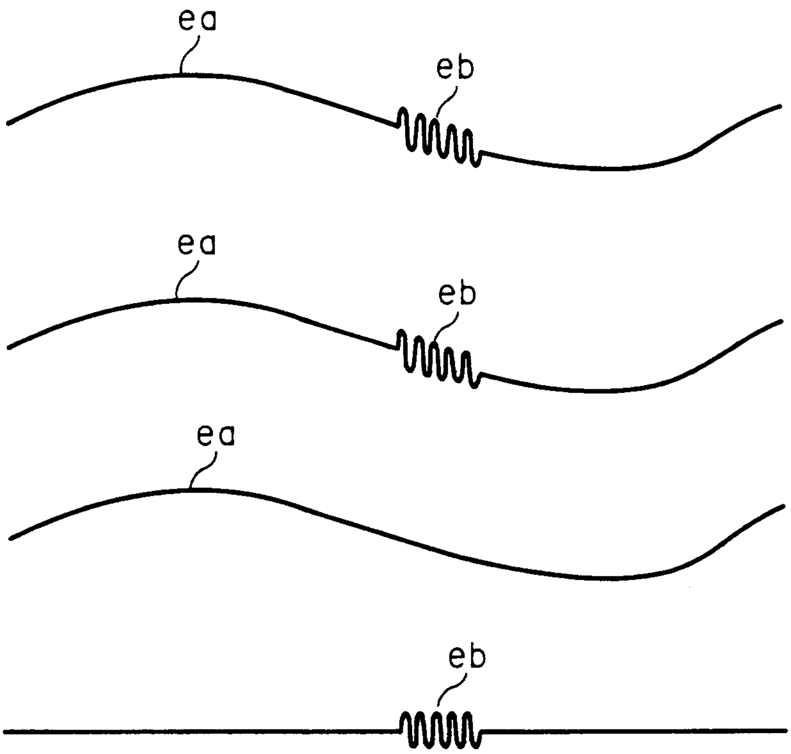


Fig.23

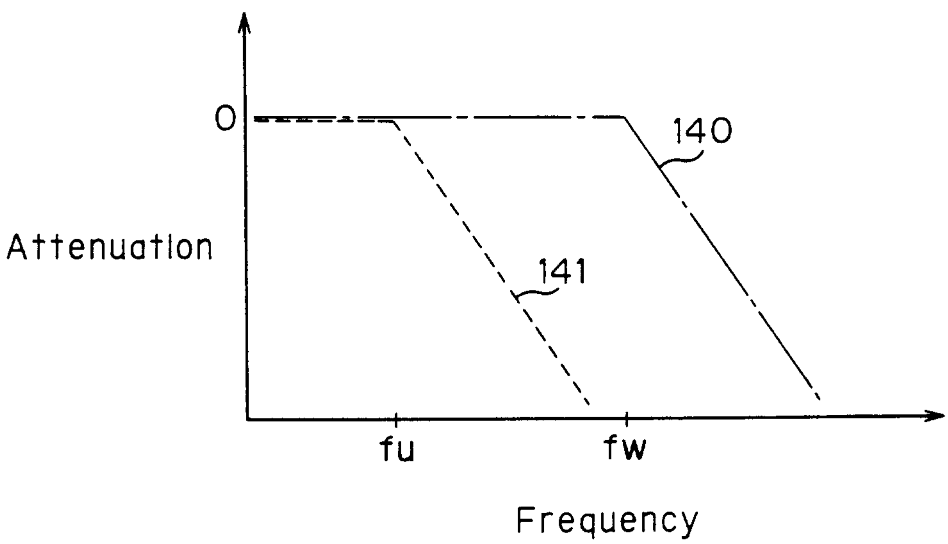

Fig.24

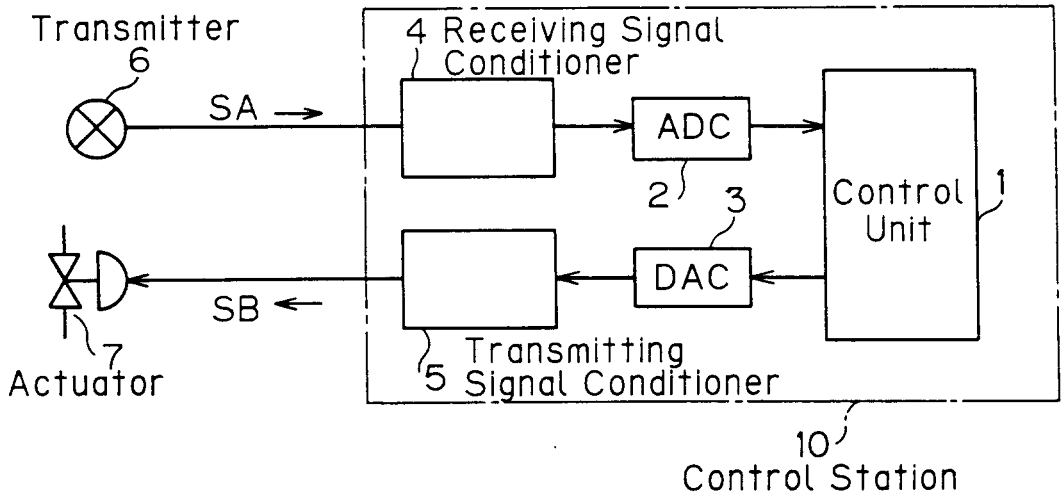
Transmitter
6
SA
4 Receiving Signal
Conditioner
ADC
2
3
Control
Unit
1
DAC
SB
7
Actuator
5 Transmitting
Signal Conditioner
10
Control Station

Fig.25

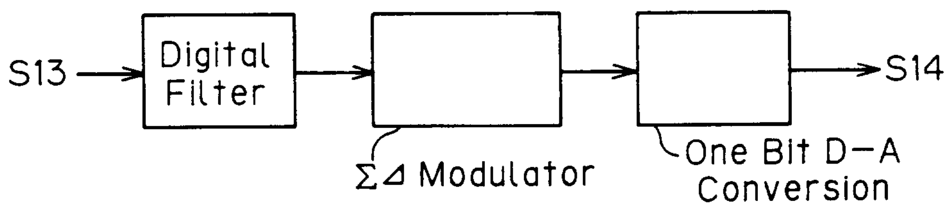
S13
Digital
Filter
ΣΔ Modulator
One Bit D−A
Conversion
S14